# EUROPEAN PATENT SPECIFICATION

(11) **EP 2 769 616 B1**
(45) Date of publication and mention of the grant of the patent: **16.08.2017**
(21) Application number: 14155331.3
(22) Date of filing: 17.02.2014
(51) Int. Cl.: A01F 15/07

(54) **Apparatus and method for feeding wrapping material into a chamber**
Vorrichtung und Verfahren zum Zuführen von Verpackungsmaterial in eine Kammer
Appareil et procédé d'alimentation en matériau d'emballage dans une chambre

(30) Priority: 22.02.2013 NL 2010351
(43) Date of publication of application: 27.08.2014
(73) Proprietor: Forage Innovations B.V., 3147 PA Maassluis (NL)
(72) Inventor: Rodewald, Peter, 3147 PA Maassluis (NL); Schlichting, Malte Cornelius, 3147 PA Maassluis (NL)
(74) Representative: Octrooibureau Van der Lely N.V.

(56) References cited:
- DE-A1- 3 617 155
- DE-A1-102004 023 701
- DE-C1- 19 539 297
- FR-A1- 2 738 453
- US-A- 5 129 207

## Description

### BACKGROUND

The invention refers to a feeding apparatus and a feeding method for feeding wrapping material towards an inlet of a chamber. An object in this chamber has to be wrapped with this wrapping material.

The problem solved by the invention occurs in particular in a round baler for agricultural material which picks up loose crop material from the ground, forms a cylindrical bale from this material, wraps the bale with a net made of twine or yarn, or with a plastic sheet and ejects the wrapped bale. In this application the bale in the chamber operates as the object to be wrapped.

### PRIOR ART

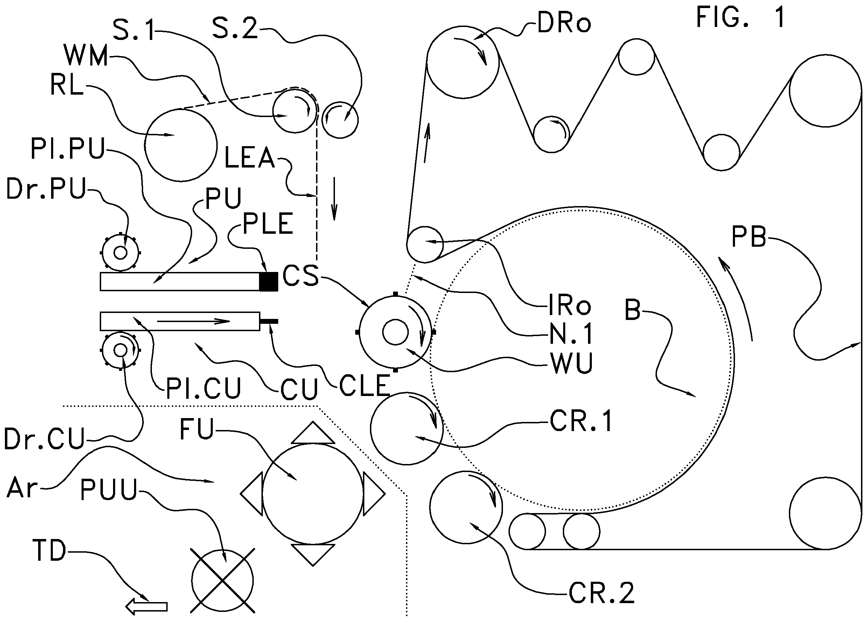

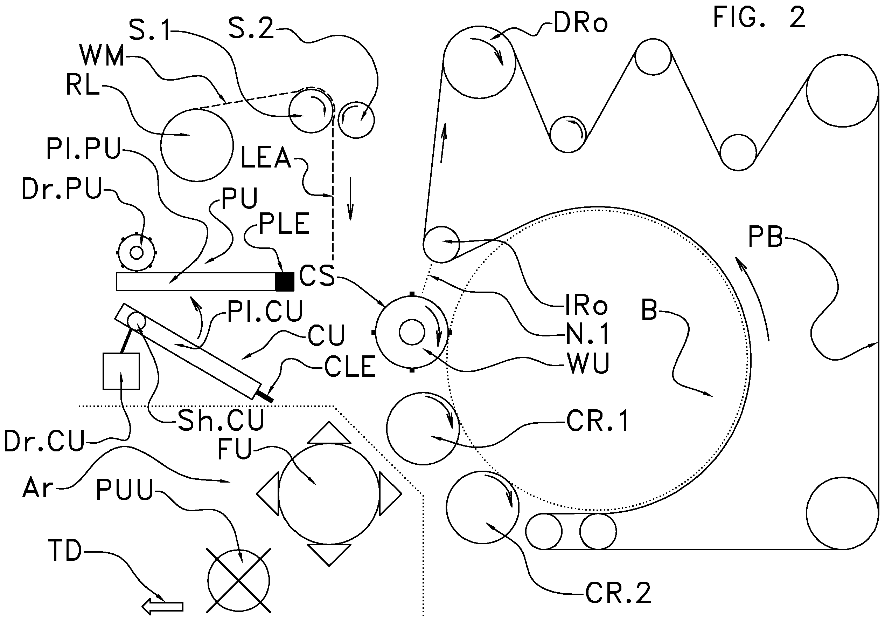

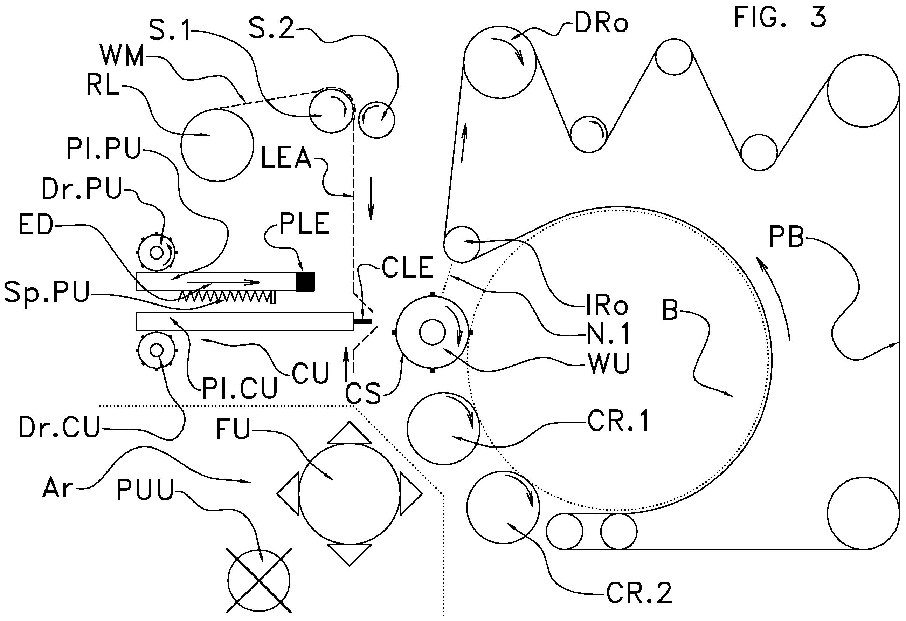

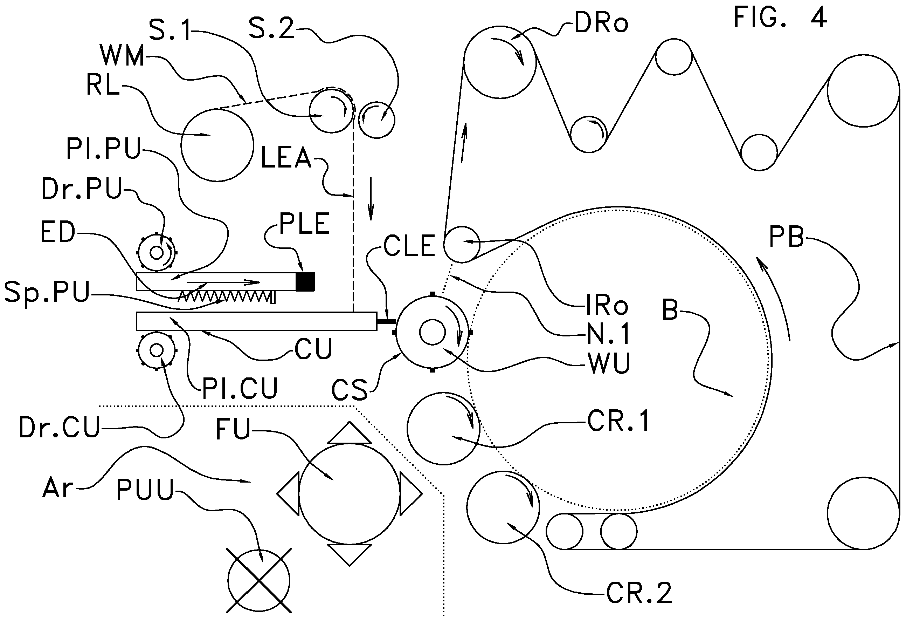

Fig. 1 of DE 102004023701 A1 shows a baler ("Maschine 1") with a bale forming apparatus ("Ballenformeinrichtung 2") in a bale forming chamber ("Ballenkammer 3"). Material is conveyed through an inlet ("Einlassöffnung 4"). Wrapping material ("Wickelmaterial 28") is inserted through a further inlet 5 into the chamber 3. A wrapping device ("Wickelvorrichtung 26") for wrapping a bale 29 comprises a reservoir ("Vorratsspeicher 27") and a positioning means ("Stellmittel 31 ") with a lever arrangement ("Hebelanordnung 33") at the side 32, cf. Fig. 2. A first lever arm ("erster Schwenkarm 34") can be pivoted around an axis 36. A guiding plate ("Fuhrungsplatte 37") and a conveying unit ("Förderelement 38") in the form of a roller together form a guiding track for the wrapping material 28. The guiding plate 37 can be shifted by the lever arm 34. Fig. 2 shows the wrapping device operated in the feeding position ("Zuführstellung"). The wrapping material 28 is guided around the guiding rollers ("Umlenkrollen 47, 48") and a cutting rod ("Schneidestange 42") into the nip 5 arranged between the two rollers 11, cf. Fig. 2. A brake ("Bremse 44") decelerates and stopps the feeding of further wrapping material 28. The roller 38 and afterwards the rotating bale 29 grasp the wrapping material 28. The positioning means 31 pivots the lever arm 34 into the position of Fig. 3. The brake 44 is released. If the wrapping of the bale 29 is completed, the cutting arm 43 is moved into the position of Fig. 4 and the wrapping material 28 is severed. The leading edge of the wrapping material 28 is disposed on the feeding table ("Zuführtisch 52") or directly on the feeding roller 38. The feeding table 52 improves the transfer of the wrapping material 28 into the inlet 5.

In EP 1808065 A1 a bale wrapping device 200 is described. A bale 400 is formed in a bale forming chamber 202 and is wrapped by a device 100, cf. Fig. 1. A net 1 is pulled off from a reel 10 by a first drive role 21 and a second compression role 22, cf. Fig. 2 and Fig. 3. Afterwards the net 1 is inserted into the bale forming chamber 202 through an inlet 5. The inlet 5 is formed by a guiding roller 205 and a tumbling roller 206. The guiding roller 205 guides several round belts 204 which contribute to forming the bale 400, cf. Fig. 3. The feeding means 21, 22 are arranged with a distance to the inlet 5 to allow debris to be dropped. A supporting means 3 can be moved into a receiving position 6 away from the inlet 5 and a position near the inlet 5, cf. Fig. 2. When being moved from the receiving position 6 towards the inlet 5, the supporting means 3 urges the net 1 into the inlet 5. In one implementation a supporting plate 31 of the supporting means 3 urges the net 1 in the inlet 5. Two bars 32 are rotatable mounted and carry the supporting plate 31, cf. Fig. 3. An electrical motor brings the bars 32 into the receiving position 6 against the force of a spring. When the bars 32 are unlocked, the spring moves the bars 32 and the supporting plate 31 rapidly towards the inlet 5.

Fig. 1 of DE 9211541 U1 shows a round baler with a chamber for creating and wrapping a bale ("Wickelraum 8"). The bale rotates in the direction of the arrow 12 and is to be wrapped into wrapping material ("Füllbahn 13") which is initially stored on a reel ("Vorratsrolle 15"). Two feeding rollers ("Abzugswalzen 18, 19") pull wrapping material 13 from the reel 15. A jogger element ("Rüttelteil 24") rotates a pivoting axis ("Schwenkachse 25") being perpendicular to the drawing plane of Fig. 2 and Fig. 3. A lever 26 connects the jogging element 24 with a spring ("Feder 27"). A rope ("Seil 28") extends the spring 27 which in turn makes the jogging element 24 rotating. A connecting lever ("Koppelglied 29") is pressed against a kind of a cam ("Kurvenbahn 30"). This cam 30 belongs to a wrapping role ("Wickelwalze 9"). The wrapping role 9 with the cam 30 rotates around the axis 32. The rotating cam 30 makes the connecting lever 29 oscillating. The wrapping material 18 sags down from the feeding rollers 18, 19 and is guided by the oscillating jogging element 24 towards the inlet ("nip 7"). A guiding sheet ("Leitblech 35") closes the space between the feeding roller 19 and the wrapping roller 9. This element prevents the wrapping material 13 to be guided against the wrapping roller 9 which event is undesired.

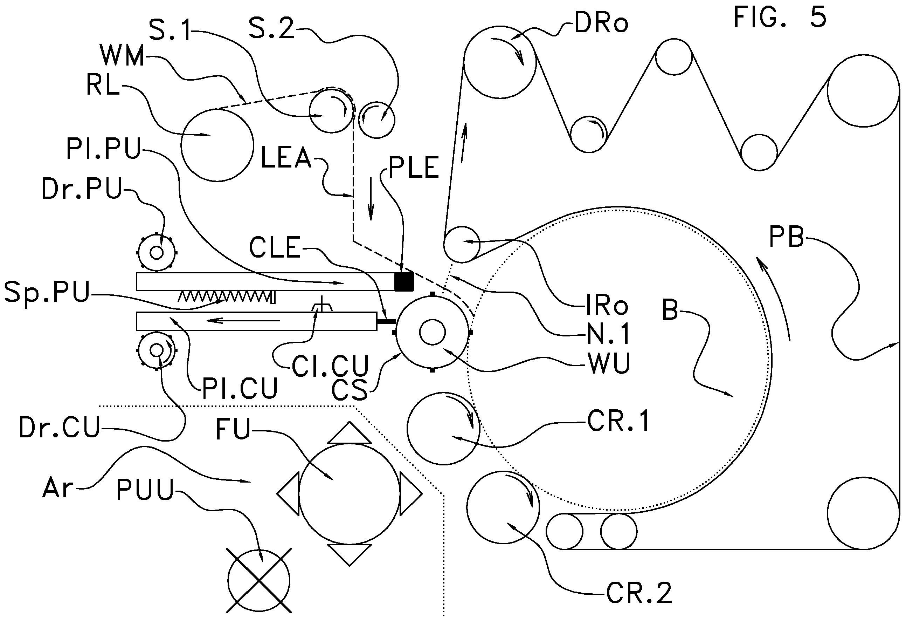

Fig. 1 of WO 2011/033494 A1 shows a baler 1 which forms a bale in a compressing chamber by using a compression belt 18 guided around several support rollers 20. Material is guided into the chamber through an inlet between the two rollers 30, 31. Binding material (netting material 39) is provided by a dispenser 38 and is inserted through an inlet 37 between the bale forming roller 32 and the compression belt 18. A deflecting roller 42 deflects and feeds the netting material 39 into the inlet 37, cf. Fig. 2. Two spaced apart carrying plates 43 carry the deflecting roller 42 and are mounted on a pivot shaft 44 which is pivotally mounted at both side walls 10. A drive transmission 41 drives the roller 42 continuously in the direction of the arrow G, i.e. clockwise. The pivot shaft 44 pivots the deflection roller 42 into a deflecting position, shown in Fig. 2 and Fig. 3, in which the deflection roller 42 guides the netting material 39, and into an idler position shown in Fig. 1. When the deflection roller 42 is in the idler position, material can fall through the inlet 37 back to the ground. A hydraulic ram 50 and a lever 51 urge the deflection roller 42 into the idler position. A gas spring 56 in turn urges the deflection roller 42 in the deflecting position, cf. Fig. 4 and Fig. 5. A guide means with a plurality of flexible guide fingers 71 guides the netting material 39 away from the compression belt 38 and towards the bale forming roller 32 such that the compression belt 38 cannot press the netting material 39 out of the inlet 37, cf. Fig. 8(a) to Fig. 8(b). These figures also show the effect of the deflection roller 42.

Fig. 1 of DE 3617155 A1 discloses a round baler ("Rundballenpresse 1") with a pressing chamber ("Pressraum 3") and a wrapping arrangement ("Hülleinrichtung 7"). Crop material ("Erntegut 2") is picked up and is conveyed through a crop material inlet ("Guteintrittsöffnung 6") into a pressing chamber 3 where a bale ("Erntegutballen 8") is formed. The wrapping arrangement 7 wraps a bale 8 in the pressing chamber 3 with a portion of wrapping material ("Hüllbahn 13"). This wrapping arrangement 7 has a reel ("Vorratsrolle 14"), a feeding mechanism ("Zuführmechanismus 15") and a cutting mechanism ("Schneideeinrichtung 16"), cf. Fig. 2.

The piston-cylinder unit ("Kolben-Zylinder-Einheit 18") of DE 3617155 A1 clamps the wrapping unit 13 by means of a clamping unit ("Klemmeinrichtung 26") and pulls off wrapping material 13 from the reel 14. A U-shaped cover ("U-förmige Abschirmung 46") protects the knife ("Trennmesser 44"), cf. Fig. 3. The free end 13a of the wrapping material 13 is placed onto a down holder ("Niederhalter 55"). The feeding mechanism 15 moves the free end 13a towards the starter roller ("Starterrolle 11 "). The free end forms a loop ("Schlaufe") which is shown in Fig. 4 with dotted lines. The free end 13b of the loop is grasped by the circumferential surface ("Umfangsfläche 12") of the starter roller 11. This free end 13 is conveyed through the nip between the starter roller 11 and the pressing roller ("Antriebswalze 9") and later through the inlet 6 into the pressing chamber 3, cf. Fig. 5. The wrapping material 13 is guided around the cover ("Abschirmung 47") and the corresponding guiding bar ("Gegenumlenkleiste 48"), cf. Fig. 4. The bale 8 rotates in the pressing chamber 3 and takes the wrapping material 13 ("wird mitgenommen"). The knife 44 severs the wrapping material 13.

The Welger patent DE 10243294 B4 describes a baler for producing round bales. The bale is created in a pressing chamber ("Pressraum 5") by means of a conveying and pressing belt ("Förder- und Pressriemen 9") and several pressing rollers 6, 7, 8 being in contact with material guided into the pressing chamber 5. Material to be pressed is supplied by a pick-up unit ("Aufsammler 15") and a feeding unit ("Förder-/ Schneidrotor 16") through a feeding aperture ("Zuführöffnung 14") into the chamber 5. The bale is wrapped with wrapping material ("Umhüllmaterial 22") which is stored in a reservoir ("Vorratsbehälter 19") containing a wrapping material role ("Umhüllmaterialrolle 20"). Two pulling rollers ("Vorzugswalzen 21") pull the wrapping material 22 from the role 20. A loose end ("freies Vorlaufende 26") of the wrapping material 22 sags. A feeding roller ("Zuführwalze 25") shifts the sagging wrapping material toward the pressing roller 8. The loose end 26 is guided through a nip ("Einführspalt 23") between the pressing roller 8 and a roller 24 around which the belt 9 is guided. The feeding roller 25 can be shifted or pivoted between a parking position 27 which is shown in dotted lines and an operating position 29 shown in continuous lines. By shifting or pivoting the feeding roller 25 into the parking position 27 the nip 23 between the feeding roller 25 and the driven roller 8 is enlarged. Material in the nip 23 drops into the feeding unit. In the embodiment of Fig. 2 the pulling roller 21 and the feeding roller 25 (in Fig. 2: roller 30) are integrated into an assembly ("Baueinheit 32") which can be rotated around the axis 33. Fig. 3 shows an embodiment where this assembly unit is shifted and not rotated.

The invention described in DE 10243294 B4 solves the problem of removing debris from an injection nip. This baler requires a feeding roller which can be rotated as well as shifted laterally and perpendicular to its rotation axis.

### PROBLEM, SOLUTION

Therefore it is an object of the invention to provide a feeding apparatus with the features of the preamble of claim 1 and a feeding method with the features of the preamble of claim 19 wherein this loose end is to be inserted successfully through the inlet into the chamber even if debris may have polluted the inlet.

The problem is solved by a feeding apparatus with the features of claim 1 and by a feeding method with the features of claim 19. Preferred embodiments are specified in the depending claims.

The solution according to the invention refers to a feeding apparatus and a feeding method. An object in a chamber has to be wrapped into wrapping material. By the feeding apparatus and by the feeding method the wrapping material is fed towards an inlet of this chamber such that the wrapping material can be inserted through the inlet into the chamber.

A wrapping material supplying unit can be operated in a supplying mode. The wrapping material supplying unit operated in the supplying mode pulls or otherwise provides the wrapping material from a reservoir. Thereby the wrapping material supplying unit supplies the wrapping material and conveys it towards the inlet. Due to the force of gravity a leading portion of this wrapping material sags down and forms a loose end area. This loose end area extends downward from the wrapping material supplying unit. As the wrapping material supplying unit continuous to supply wrapping material, the loose end area increases until it reaches the chamber.

A pushing unit is mounted such that the increasing loose end area comes into a position between the pushing unit and the inlet. The pushing unit can be moved in an engaging direction towards the inlet. When the pushing unit is moved in the engaging direction towards the inlet, the pushing unit hits the sagging loose end area of the wrapping material and pushes it laterally towards the inlet in the engaging direction. The term "pushing laterally" refers to the vertical direction of the increasing loose end area. With other words: The loose end area extends in a vertical plane and is pushed perpendicular or angular to this plane.

A closing unit belonging to the feeding apparatus can be operated in a closing position and in a parking position.

The closing unit being operated in the closing position is arranged below the pushing unit. The closing unit is at least in the closing position while the pushing unit is moved in the engaging direction towards the inlet of the chamber. In this closing position the closing unit closes entirely or at least partially an area in which the wrapping material must not drop. The closing unit in the closing position is arranged between the wrapping material and this area. This area is arranged angularly besides and/or below the inlet into the chamber. The closing unit is arranged above this area. The closing unit in the closing position inhibits the wrapping material from dropping into the area.

When operated in the parking position, the closing unit releases at least partially this area.

### ADVANTAGES

The pushing unit pushes the loose end formed by the leading portion of the wrapping material in the engaging direction towards the inlet even if debris is collected in the inlet. This debris is collected after it was rubbed off from the object in the chamber and after it was ejected out of the chamber and/or it was picked-up from the ground and conveyed towards the inlet. Therefore the moving and shifting pushing unit allows inserting the wrapping material into the chamber against the resistance of this debris. Thanks to the invention the inlet can be narrow and can be arranged in a lateral orientation with respect to the chamber.

The pushing unit allows arranging the wrapping material supplying unit such that the loose end area and therefore the leading portion sag down with a distance to the inlet of the chamber. It is not necessary that the loose end area is situated vertically above the inlet. The pushing unit pushes the sagging loose end area of the wrapping material laterally or angularly towards the inlet. It is quite easy to adapt the position and the engaging direction of the pushing unit to the arrangement of the wrapping material supplying unit with respect to the inlet. This makes the implementation of the wrapping material supplying unit more easy as the wrapping material supplying unit can be arranged besides and outsides the chamber and not necessarily above the chamber or even inside the chamber. This arrangement besides the chamber makes it easier to add a new reel with wrapping material to the reservoir if one reel is entirely used and therefore empty. The reservoir can be mounted at a place where a human operator can obtain access and can replace an empty reel with a new reel with wrapping material. In addition it is easier to arrange the feeding apparatus in the available space of a machine comprising the feeding apparatus.

The pushing unit increases the availability of the feeding apparatus in particular if the orientation of the loose end area with respect to the inlet may change and cannot predicted precisely. This may in particular take place if the feeding arrangement is implemented on a vehicle and the vehicle moves over a hilly ground or is accelerated and decelerated. It is possible but thanks to the invention not necessary to provide the vehicle with an inclination sensor. In addition the loose end area may be subjected to environmental influences, e.g. to wind or rain. In general the vehicle has no sensor for such environmental influences. Thanks to the invention the risk is reduced that such influences disturb or even inhibit the step of injecting the wrapping material through the inlet into the chamber.

The pushing unit also increases the availability of the feeding apparatus in that case that the same feeding apparatus is used with different kinds of wrapping material or for wrapping objects with different surface properties. Thanks to the invention it is not necessary to calibrate or to adapt the feeding apparatus to the currently used sort of wrapping material.

The pushing unit shifts the wrapping material towards and through the inlet even if debris is collected in the inlet. Therefore the pushing unit saves a specific cleaning unit for the inlet. It is further not necessary to provide a debris sensor which detects debris or dirt in the inlet.

The pushing unit saves the need to implement a specific cleaning unit which cleans the inlet of the chamber from debris and from dirt. Such a cleaning unit needs a drive and must be monitored. Thanks to the invention it is sufficient to use the pushing unit for cleaning the inlet. But it is also possible to combine the pushing unit with a specific cleaning unit.

The pushing unit helps to inject the loose end of the wrapping material through the inlet into the chamber even if debris has polluted this inlet and even if the wrapping material has a low stiffness, e.g. is a net. The moved pushing unit can remove such debris by pushing the debris into the chamber. The pushing unit avoids the need of providing a mechanism which enlarges and narrows a nip between a conveying unit for the wrapping material and the inlet such that debris can drop through the enlarged nip.

According to the invention a closing unit can be operated in the closing position. In this closing position the closing unit is arranged below the pushing unit and inhibits the increasing loose end area of the wrapping material from dropping into an area outside of the chamber. The wrapping material must not drop into this area as the wrapping material being in the area may be grasped by a rotating element or may be attached to a protruding element, e.g.

The feeding apparatus comprises the closing unit in particular because the pushing unit may hit the sagging loose end area (leading portion) too late. This event may happen due to a not absolutely precise synchronization between the pushing unit and the wrapping material supplying unit. It may even happen that due to a malfunction the pushing unit is not moved at all in the engaging direction or is not moved far enough and does not hit the loose end area at all or does not shift the loose end area over a sufficiently large distance or not with a sufficient mechanical impact. It is also possible that the pushing unit moves too late in the engaging direction and hits the wrapping material too late - the wrapping material is already dropped into the area. Without the closing unit the loose end area would drop into the area besides and/or below the inlet and the pushing unit and may be grasped by a rotating unit, e.g. a feeding rotor, which operates in this area.

The closing unit prevents such an undesired event which otherwise would block an arrangement with the feeding apparatus and would often require a manual maintenance. Even if the pushing unit does not hit and push the wrapping material, the closing unit is below the wrapping material and the area and prevents the wrapping material from dropping into the area. The closing unit also saves the need that the pushing unit must precisely and automatically be monitored and the wrapping material supplying unit must be stopped in the case of a detected malfunction of the pushing unit. In addition the invention enables to provide a feeding apparatus with a higher manufacturing tolerance for the parts of the feeding apparatus and a higher working tolerance for synchronizing the operation of these parts. Thanks to the invention it is not required to provide a sensor which detects the undesired event that the wrapping material drops into the area.

The closing unit in the closing position also protects a human from grasping into the area, e.g. during inspection work. Therefore the invention better protects a human operator.

One further advantage of the invention is therefore that thanks to the invention the availability of the arrangement is increased. Providing the closing unit allows a larger tolerance in the synchronization between the wrapping material supplying unit and the pushing unit. Thanks to the closing unit no malfunction occurs even if the pushing unit fails to push the loose end area away from the area or pushes it too late away from this area. Therefore the invention with the closing unit increases the availability of an arrangement with the feeding apparatus, e.g. a bale forming and wrapping apparatus.

The closing unit is operated in the parking position when the closing function of the closing unit is not required, in particular if no wrapping material can drop into the area to be protected. Loose material, in particular debris and dirt, and a rigid object can now drop into the area.

The closing unit is therefore not a stationary element which permanently closes the area into which the wrapping material must not drop. If this area were permanently closed, debris from the object in the chamber and dust etc. would be collected on the closing unit and would disturb the step of injecting the wrapping material into the inlet. To remove this debris from a stationary closing unit a specific cleaning unit or a manual cleaning operation would be required. Thanks to the invention debris and dust drops into the area and drops onto the ground or is conveyed in a regular way through the inlet into the chamber. Debris, dirt, and dust can drop. The closing unit in the parking position does not form an obstacle for them as long as the closing unit is in the parking position.

According to the invention this area is only temporarily closed, namely only as a long as the closing unit is in the closing position. Debris and dust can drop downwards and can pass the closing unit as long as the closing unit is in the parking position. Therefore the closing unit is preferably in the parking position at least as long as the wrapping material supply unit does not supply wrapping material.

### EMBODIMENTS

According to the invention the closing unit is not stationary but can be moved into two different positions. In one embodiment the closing unit is pivotally mounted. The closing unit can be pivoted from the closing position into the parking position and back from the parking position into the closing position. In one implementation the closing unit can be pivoted from the parking position into the closing position by being rotated around a rotating axis. In a further implementation the closing unit is shifted along a trajectory into the closing position. This trajectory can consist of or can comprise a linear segment and/or a curved segment.

Preferably the closing unit and the parking unit are operated as follows: First the closing unit is pivoted or shifted from the parking position into the closing position. The closing unit is preferably pivoted into the closing position before the loose end area reaches the pushing unit. Afterwards the pushing unit is moved in the engaging direction and pushes the leading portion towards the inlet. Preferably the closing unit is pivoted back into the parking position as soon as the wrapping material is injected through the inlet into the chamber and is grasped in the chamber such that the wrapping material cannot drop into the area even if the closing unit has been pivoted or shifted back in the parking position. Preferably the closing unit is operated in the parking position as long as possible and in the closing position as short as possible.

In one embodiment the feeding apparatus comprises a closing unit drive for pivoting or shifting the closing unit. This makes it easier to let the closing unit operate as long as possible in the parking position and only as long as necessary in the closing position.

In one embodiment the closing unit is mechanically connected with a further moving object of an arrangement comprising the feeding apparatus and is pivoted or shifted together with this object by a common drive. This further moving object can be a cutting edge of a severing member which severs the wrapping material after the object in the chamber is entirely wrapped. The movement of the cutting edge pivots or shifts the closing unit from the closing position into the parking position. When this further object is moved, the closing unit needs no longer to be operated in the closing position.

In a further embodiment a dedicated closing unit drive pivots the closing unit. The closing unit drive can comprise a controlled positioning means and a passive member, e.g. a spring. The spring pushes the closing unit into the closing position. The positioning means pivots the closing unit back in the parking position. In one implementation the drive is controlled and pivots the closing unit from the closing position into the parking position. A passive propulsion element, e.g. a spring, urges the closing unit from the parking position into the closing position. As this propulsion element operates in a passive manner, the risk of a malfunction is very low. The passive propulsion element can accelerate the pushing unit very quickly and does neither require electrical energy nor a hydraulic motor.

In one embodiment the feeding apparatus further comprises a wrapping material conveying unit with a conveying surface. This conveying surface is arranged with a distance to the inlet and moves in a continuous manner and conveys the loose end area of the wrapping material towards the inlet. In one implementation a roller with protrusions is rotated around its own symmetrical axis. Preferably the conveying surface of the conveying surface conveys the loose end area after the pushing unit has hit the loose end area. This wrapping material conveying unit further reduces the risk that the apparatus fails to insert the wrapping material properly into the chamber. Preferably the wrapping material conveying unit is arranged between the inlet and the pushing unit and above the area into which the wrapping material must not drop. The increasing loose end area is shifted against or dropping onto the conveying surface of the wrapping material conveying unit and is further conveyed towards the inlet. The wrapping material conveying unit is arranged completely outside of the chamber.

Preferably the wrapping material conveying unit comprises a conveying surface which is continuously driven and which conveys the leading portion of the wrapping material towards the inlet. A continuous movement stresses the material less than an oscillating or otherwise discontinuous movement.

The conveying surface of the wrapping material conveying unit preferably has several protrusions. In one implementation a roller with ribs on its surface rotates and conveys the loose end area. The conveying surface and in particular the conveyed protrusions remove debris out of the inlet and away from the chamber. In addition the conveying surface conveys the wrapping material towards the inlet even if the pushing unit does not hit the wrapping material due to malfunction.

Preferably the closing unit is pivoted or shifted into the closing position at least before the pushing unit is moved in the engaging direction. This embodiment increases the reliability of the feeding apparatus as the closing unit is early enough in the closing position.

In one embodiment the movement of the pushing unit is started after the closing unit has reached its closing position. This embodiment further decreases the risk that the wrapping material drops into the area. In an alternative embodiment the movement of the pushing unit is already started before the closing unit has reached its closing position and after the pivoting of the closing unit has started. This embodiment ensures that the closing unit is as long as possible in the parking position.

In one embodiment the event that the wrapping material supplying unit starts to supply wrapping material from the reservoir triggers the step of pivoting the closing unit from the parking position into the closing position.

In one implementation a time span is given. The wrapping material supplying unit is switched into the supplying mode and starts to provide wrapping material. The time span passes. Then the closing unit is moved into the closing position.

In one embodiment the closing unit in the closing position is situated directly above the area into which the wrapping material must not drop. This embodiment saves vertical space. In an alternative embodiment a vertical distance between the area and the closing unit above the area occurs. This embodiment yields a greater tolerance for the mounting and the pivoting of the closing unit. A section of the wrapping material may temporarily come into a position below the closing unit without dropping into the area.

In one embodiment the closing unit is pivoted or shifted by a closing unit drive and operates additionally as a further pushing unit. A leading edge of the closing unit operating as the further pushing unit is moved in the engaging direction and hits the loose end area of the wrapping material laterally and shifts this loose end area towards the inlet. By this shifting step the wrapping material is prevented from dropping into the area. If a wrapping material conveying unit is used, a distance between the leading edge of the closing unit and the wrapping material conveying unit besides the inlet remains. This embodiment omits a contact between the wrapping material conveying unit and the closing unit. An undesired interaction is avoided. This embodiment has the consequence that the leading edge of the wrapping material passes the closing unit before the closing unit reaches the closing position. In this embodiment the closing unit inhibits the wrapping material from dropping into the area by pushing the loose end area laterally before it reaches the area. In one embodiment the closing unit is shifted in the engaging direction and afterwards the pushing unit is also shifted in the engaging direction. This embodiment further reduces the risk that no unit pushes the loose end area towards the inlet due to a malfunction.

In an alternative embodiment the closing unit is pivotally mounted and reaches the closing position before the leading edge of the web of wrapping material reaches the closing unit. Or the closing unit passes the path of the increasing leading portion of the wrapping material and inhibits this leading portion from moving further downwards. The closing unit blocks the further downward path of the leading portion forming the loose end area. An increasing portion of the loose end area is placed onto an upper surface of the closing unit at least until the pushing unit hits the loose end area. The closing unit in the closing position supports the step of guiding the leading portion towards the inlet. In this embodiment the closing unit in the closing position covers the area and inhibits by this covering operation the leading portion from dropping into the area as this area is covered by the closing unit.

In a refinement of this embodiment the closing unit is arranged such that the closing unit in the closing position touches the wrapping material conveying unit which is arranged besides the inlet. A conveying surface of this wrapping material conveying unit conveys the wrapping material towards the inlet. The closing unit reaches the closing position before the sagging and increasing leading portion of the wrapping material can reach the closing unit. The closing unit entirely closes the area. A leading edge of the wrapping material cannot drop in a position below the closing unit. This embodiment avoids with an even higher security the undesired event that the wrapping material drops into the area. This embodiment increases the availability in particular if the feeding apparatus is a part of a vehicle which is moved over a hilly ground such that the position of the leading portion with respect to the area can vary. Preferably the leading edge of the closing unit is made of an elastic material, e.g. of rubber.

Preferably the pushing unit comprises a plate with a free edge. This free edge operates as the leading edge when the pushing unit plate is moved in the engaging direction. Preferably also the closing unit comprises such a leading edge. These leading edges are in one embodiment made from a material with a low friction coefficient such that only a low friction between the leading edges and the wrapping material and in one embodiment between the leading edges and the wrapping material conveying unit occurs. The embodiment with the plate requires less material than a lever such that the pushing unit and the closing unit can be moved with less energy. Little tension or no tension at all is urged onto the wrapping material. This embodiment reduces the risk that the wrapping material is damaged by the pushing unit or by the closing unit.

In one embodiment the pushing unit is moved into the inlet when being moved in the engaging direction. In a refinement the pushing unit being moved to the engaging position engages the inlet. In a further refinement the pushing unit into the engaging position even touches the object which is to be wrapped in the chamber. This embodiment further reduces the risk that debris in the inlet inhibits the wrapping material for being inserted into the chamber through the inlet.

Preferably the pushing unit is moved in the engaging direction with a purely linear movement, i.e. a purely translational movement. This embodiment enables a directed and guided impact onto the wrapping material and a more direct impact than a rotating movement effected by a lever arrangement, e. g. A very quick movement of the pushing unit can be achieved.

In one embodiment the pushing unit hits the sagging loose end area above the lower edge of the loose end area. The kinetic energy of the moved pushing unit and the inertia of the loose end area together form a bulge into the loose end area. This bulge comprises two layers of wrapping material. The pushing unit shifts this bulge towards the inlet. The bulge and therefore two layers of wrapping material are shifted through the inlet into the chamber. This embodiment increases the reliability of the process of injecting the web of wrapping material into the chamber. The wrapping material is grasped by the rotating object.

Preferably the loose end area sags down in a slack manner and pushing unit does not employ a tension onto the web of wrapping material. This embodiment reduces the risk that the wrapping material is damaged by the injecting step.

In an alternative embodiment the pushing unit comprises a plate which is rigidly connected with at least one lever, preferably with two levers for preventing canting. The lever or both levers synchronously can be rotated around a pivoting axis in both directions. Rotating the lever(s) in the one rotating direction causes the plate of the pushing unit to be moved in the engaging direction. Rotating the levers in the opposite direction causes the plate to be moved from the engaging position into a parking position. In one implementation the closing unit is shifted by a linear movement into the closing position. A linear movement in the opposite direction transfers the closing unit back into the parking position. In a further implementation also the closing unit is mounted between two lever and the levers are rotated in order to pivot the closing unit.

In one embodiment the closing unit is moved by being shifted with a purely linear movement into the closing position. This purely linear movement does not require much space in the vertical direction. The closing unit can be arranged directly above a rotating unit and directly above the area to be covered. In a further embodiment the closing unit is moved along a trajectory comprising a linear segment and a curved segment.

In an alternative embodiment the closing unit can be pivoted around a pivoting axis. This pivoting axis is preferably horizontal and perpendicular to the engaging direction in which the pushing unit shifts the wrapping material. Pivoting the closing unit into the closing position comprehends the step that the closing unit is rotated around this rotating axis. This step required less kinetic energy and less power.

In a refinement of this embodiment the closing unit is rotated upwards into the closing position and is rotated downwards out of the closing position into the parking position. The closing unit in the parking position is sloping downwards such that debris on the upper surface of the closing unit in the parking position slips downwards.

In one embodiment the feeding apparatus comprises a guiding member for guiding a plate of the closing unit along a trajectory. Moving the plate in a first direction along the trajectory shifts the closing unit into the closing position. Moving the plate back in the opposite direction shifts the closing unit back into the parking position. The guiding member can comprise two lateral rails which are mounted such the plate is arranged between these two rails.

In one embodiment the object is created in the chamber and afterwards wrapped in this chamber. The step that the creation of the object is finished triggers the two steps that the wrapping of the object starts and that the closing unit is pivoted into the closing position. The time which the wrapping material needs to reach the pushing unit is used for pivoting or shifting the closing unit from the parking position into the closing position. The closing unit is pivoted or shifted back into a parking position as soon as possible, e.g. if the leading portion of the wrapping material has been injected through the inlet into the chamber and is clamped by the object in the chamber and by a part of the chamber.

The feeding apparatus according to the invention can be used in a stationary arrangement, e.g. in an arrangement for wrapping a bale made of paper, of cartridge, or of another recycling material. The feeding apparatus can also be part of a vehicle which is moved over ground and picks up loose crop or waste material from the ground. The invention prevents a jam and a further malfunction, in particular in an application where the vehicle may take different inclination values during its movement.

These and other aspects of the invention and of the preferred embodiments will be even more apparent from the detailed embodiment as described below and will be elucidated in detail there.

### DESCRIPTION OF EMBODIMENT

In the following an embodiment of the invention is described with reference to the following figures:
Fig. 1 shows schematically the baler with the feeding apparatus before starting the wrapping procedure with the closing unit and the parking unit in the parking position where the closing unit can be moved linearly;
Fig. 2 shows a modification of the baler of Fig. 1 before starting the wrapping procedure with a rotatable closing unit in the parking position;
Fig. 3 shows the baler of Fig. 1 with an embodiment in which the closing unit is linearly shifted in the closing position and hits the wrapping material laterally;
Fig. 4 shows an alternative embodiment in which the shiftable closing unit in the closing position entirely closes the area besides the feeding conveying unit and the wrapping material drops onto the closing unit;
Fig. 5 shows the baler of Fig. 1 with the pushing unit moved into the engaging position;
Fig. 6 shows a slightly different embodiment with a pushing unit plate sloping downwards and forming a bulge in the wrapping material;
Fig. 7 shows the baler with the feeding apparatus where the rotating bale has grasped the wrapping material and both units moving into the parking position.

According to the embodiment, the invention is used in a round baler. The round baler is moved in a travelling direction over ground and creates under pressure a round bale in a pressing chamber. This bale has a round-cylindrical shape with two round front faces and a circumferential surface between the front faces. The bale is created from loose agricultural crop material (hay, straw, silage or other fodder material).

The loose crop material is picked up from the ground by a pick-up unit and is fed through a feeding channel towards an inlet of the pressing chamber by means of a rotary rotor with rigid tines and is inserted into the pressing chamber. In one embodiment the picked-up material is cut by several knives of the baler before being inserted into the pressing chamber.

The pressing chamber comprises several conveying units which convey the crop material along the circumferential wall of the pressing chamber. Each conveying unit comprises a conveying surface which comes in contact with the crop material and conveys it. The conveying units can be implemented as pressing rollers, pressing belts guided over guiding rollers, or aprons with chains and lateral rods. The crop material conveyed under pressure along the circumferential wall forms a growing round-cylindrical bale which rotates around a bale rotating axis. This bale rotating axis is perpendicular to the travelling direction, to the two front faces of the bale, and to the two parallel side walls of the pressing chamber.

Fig. 1 shows a round baler comprising the feeding apparatus according to the invention. The baler is propelled in the travelling direction TD from left to right in Fig. 1. This round baler comprises
- a pick-up unit PUU with several spring-mounted tines,
- a feeding unit FU with several star-shaped rotating rotors above the feeding channel (one rotor is sketched),
- several cutting knives (not shown) below the feeding channel,
- two driven conveying rollers CR.1, CR.2 acting as two starter rollers above which the bale starts to increase,
- a wrapping material conveying roller WU,
- a driven roller DRo and several idle rollers, among then the idle roller IRo, and
- a pressing belt PB guided around the rollers DRo, IRo, and around further idle rollers.

The loose agricultural material is inserted into the pressing chamber through the nip between the two adjacent conveying rollers (starter rollers) CR.1, CR.2. The conveying direction for the crop material is approximately opposite to the travelling direction TD.

The crop material in the pressing chamber forms a growing bale B. This bale B is rotated around a rotating axis perpendicular to the drawing plane and in Fig. 1 anti-clockwise. The rollers CR.1 and CR.2 and further conveying units contribute to forming and rotating the bale B. The wrapping material conveying unit WU can be arranged such that it also touches the bale. Preferably a distance between the wrapping material conveying unit WU and the pressing chamber remains.

After the creation of the bale B in the pressing chamber is completed, the bale B has to be wrapped in the pressing chamber with wrapping material such that the bale does not fall apart. Afterwards the wrapped bale is ejected out of the pressing chamber. The wrapping material may consists of several strands of twine, a prefabricated net made of twine or a plastic sheet, e.g., and prevents the bale B from falling apart after being ejected out of the pressing chamber. The wrapping material is stored in a reservoir of the baler being arranged outside of the pressing chamber, e.g. in a reel which can rotate around a reel rotating axis being parallel to the bale rotating axis and perpendicular to the travelling direction TD. In the embodiment the reservoir is arranged angularly ahead of the pressing chamber - seen in the travelling direction TD - and angularly above the bale rotating axis. The distance from the reservoir to the ground is only as large as necessary such that a human operator can easily replace an empty reel with a new one.

A web of wrapping material is pulled off from this reel. In the embodiment two rollers contact each other and rotate in different rotating directions. The rollers pull the wrapping material which is clamped between these two rollers. At least one of these pulling rollers is driven. In an alternative embodiment the feeding unit is implemented by means of a pivotal duck bill which grasps the wrapping material WM by means of two yaws and pulls the wrapping material from the reservoir.

In Fig. 1 a reel RL for wrapping material WM is shown. The reel RL is placed such that the reel RL can be rotated around a rotating axis perpendicular to the travelling direction TD and to the drawing plane of Fig. 1. Preferably two lateral axle stubs keep the reel RL. The two rotating rollers S.1, S.2 pull off the wrapping material WM from the reel RL. In the embodiment only one roller S.1 or S.2 is driven and the other roller S.2 or S.1 is set into rotation by the driven roller. The width of the wrapping material reel RL is sufficient to wrap the entire circumferential surface of the bale B by pulling off wrapping material WM from the reel RL and inserting it into the pressing chamber. The reel RL is rotated clockwise around a rotation axis perpendicular to the drawing plane of Fig. 1 and parallel to the rotating axis of the bale B.

After having left the contact surface between the two rollers S.1, S.2, a leading portion of the wrapping material WM forms a loose end area LEA which is not guided but freely sags by the force of gravity as the wrapping material WM has a very low stiffness and is slack. This loose end area LEA is situated angularly above the pressing chamber and above the inlet N.1 for the wrapping material WM and is - seen in the travelling direction TD - ahead of the chamber. The leading portion LEA increases as long as the rollers S.1, S.2 continue to rotate and to pull wrapping material WM from the reel RL.

The wrapping material WM is conveyed through an inlet N.1 into the pressing chamber. In the embodiment the baler has an own inlet for wrapping material. The lower border of this inlet N.1 is formed by the wrapping material conveying unit WU which conveys the wrapping material WM towards the rotating bale B. The wrapping material conveying unit WU may comprise a driven roller (as in the embodiment), a driven endless belt, or a chain conveyor.

In one embodiment (shown in Fig. 1) the wrapping material conveying unit WU is in contact with the rotating bale B and contributes to forming and rotating the bale B under pressure and to convey the wrapping material WM. In a preferred embodiment a space between the wrapping material conveying unit WU and the pressing chamber remains such that the wrapping material conveying unit WU is less polluted by loose crop material and bridges the gap between the loose end area LEA and the inlet N.1.

The baler can be operated in a hilly environment and therefore be moved over a sloping ground. Due to ground inclination the baler and in particular the parts shown in the figures may be rotated or tilted around a horizontal axis being perpendicular to the drawing plane. Therefore the position of the sagging increasing loose end area LEA with respect to the inlet N.1, the wrapping material conveying unit WU, and the feeding unit FU may vary and can differ from that position which is shown in the figures.

After the wrapping material WM is inserted through the inlet N.1 into the pressing chamber, the wrapping material WM is further injected into the space between the conveying roller CR.1 and the rotating bale B and is grasped by the rotating bale B. The rotating bale B and the conveying units surrounding the pressing chamber now take the task of pulling off the wrapping material WM from the reservoir RL. The two rollers S.1, S.2 of the wrapping material supplying unit are switched into an idler mode and only guide the wrapping material WM. A required number of layers of wrapping material WM are placed around the circumferential surface of the rotating bale B. If the wrapping of the bale B is finished, a cutting arrangement (not shown) severs the web of wrapping material WM such that the outer layer around the bale B is separated from the wrapping material WM on the reservoir RL. A sagging loose end area remains.

The wrapping material conveying unit WU has a conveying surface CS for conveying and rotating the bale B as well as for conveying the wrapping material WM. Preferably the conveying surface CS of the wrapping material conveying unit WU is provided with several protrusions which extend perpendicular to the conveying direction over the entire width of the conveying surface CS. In the embodiment these protrusions extend parallel to the rotating axis of the roller WU.

Preferably the wrapping material conveying unit WU is permanently rotated. This embodiment reduces the mechanical stress and ensures that the wrapping material WM is conveyed towards the inlet N.1.

The wrapping material conveying unit WU of Fig. 1 is driven clockwise. In the situation shown in Fig. 1 the baler forms the bale B. In one embodiment the wrapping material conveying unit WU contributes to rotating the bale B. Several rips on the conveying surface CS of the wrapping material conveying unit WU protrude from the conveying surface CS and extend along the circumferential surface of the wrapping material conveying unit WU and perpendicular to the drawing plane of Fig. 1. The rotating wrapping material conveying unit WU removes debris from the inlet N.1, in particular by means of the protrusions on the conveying surface CS.

In the embodiment the wrapping material WM has to be inserted into the pressing chamber through the inlet N.1, that is the nip between the driven wrapping material conveying unit WU and the idle roller IRo around which the pressing belt PB is guided.

The invention refers to a feeding apparatus for feeding the wrapping material WM towards the inlet N.1. The feeding apparatus feeds wrapping material WM such that the wrapping material WM is afterwards inserted through the inlet N.1 in the pressing chamber and into the space between the bale B and the wrapping material conveying unit WU. The wrapping material supplying unit with the rollers S.1, S.2 and the wrapping material conveying unit WU belong to the feeding apparatus of the embodiment.

The following problems occur during the step of conveying the wrapping material WM towards the inlet N.1 and introducing it into the pressing chamber:
- The sagging loose end area LEA of the wrapping material WM has to be inserted into the pressing chamber through the nip N.1. The web of wrapping material WM must therefore be guided on its way from the two driven pulling rollers S.1, S.2 to this nip N.1. As the nip N.1 is arranged besides and not above the chamber, this nip N.1 is not arranged vertically above the pressing rollers but angularly besides it. The sagging loose end area LEA of the wrapping material WM must be shifted angularly or laterally towards the nip N.1.
- As the inlet N.1 forms a slot or nip in the circumferential surface of the pressing chamber, the inlet N.1 can only be narrow. Otherwise a lot of crop material would be pressed out of the pressing chamber through the inlet N.1. Nevertheless the wrapping material WM has to be inserted through this narrow slot or nip into the pressing chamber.
- The position of the leading portion (loose end area) LEA relative to the nip N.1 can vary, in particular if the baler is operated in a hilly environment or if wind urges onto the baler and onto the sagging loose end area LEA.
- Due to tolerances the actual synchronization between the different parts of the feeding apparatus may differ from a required or designed or desired synchronization.
- The leading portion LEA of the wrapping material WM sags down after having left the pulling rollers S.1, S.2. This leading portion LEA must be moved laterally, i.e. horizontally or sloping downwards, in order to hit the inlet N.1. It must be inhibited that the leading portion LEA is grasped by the rotating rotor FU below the pulling rollers S.1, S.2. Fig. 1 shows the area Ar into which the wrapping material WM should not drop. The feeding unit FU with the rotating rotor is situated in this area Ar.
- Debris is rubbed off from the rotating bale B. This debris may be inserted from the chamber into the inlet N.1 for the wrapping material WM and may block this inlet N.1 such that no wrapping material WM can be injected into the pressing chamber. This problem occurs in particular as wrapping material WM having the shape of a net or a twine may be very slack and have only a low stiffness.
- The same baler may be operated with different sorts of wrapping material having different physical properties.

To solve these problems the feeding apparatus according to the invention comprises two parts which together guide the wrapping material WM towards the inlet N.1 even in the case of debris in the inlet N.1 and prevents the wrapping material WM from dropping into the area Ar:
- a closing unit CU and
- a pushing unit PU being arranged above the closing unit CU.

In the embodiment the pushing unit PU comprises a plate PI.PU. The closing unit CU comprises a further plate PI.CU. Both plates PI.PU, PI.CU are preferably made of rigid material, e.g. of steel.

The closing unit CU can be pivoted or shifted from a parking position into a closing position and back from the closing position into the parking position. In the closing position the plate PI.CU of the closing unit CU closes the area Ar entirely or at least partially from above. The plate PI.CU being in the parking position releases this area Ar and allows debris to drop into the area Ar.

The pusher plate PI.PU of the pushing unit PU can be moved from a parking position in an engaging direction ED into an engaging position and back from the engaging position in a disengaging direction into the parking position.

In the embodiment the plate PI.PU of the pushing unit PU can be moved by a linear movement in the engaging direction ED towards the inlet N.1 into the engaging position. The engaging direction ED is horizontal or is sloping downwards. In one embodiment the plate PI.CU of the closing unit CU can also be moved by a linear movement into the closing position. Fig. 1 shows this embodiment. The pushing unit PU and the closing unit CU are in Fig. 1 in the parking position.

The plate PI.PU of the pushing unit PU can be shifted in a horizontal or sloping direction and in the opposite horizontal direction. The plate PI.CU of the closing unit CU can be moved in a further horizontal direction and in the opposite direction or can be pivoted into the closing position. All horizontal directions lie in the drawing plane of Fig. 1. A positioning device with two drives Dr.CU, Dr.PU for the two units CU, PU moves both plates PI.PU, PI.CU.

Fig. 1 shows the closing unit CU and the pushing unit PU both being in the parking position as well as a drive Dr.PU for the pushing unit PU and a drive Dr.CU for the closing unit CU. As can be seen a distance between the area Ar and the closing unit CU above the area Ar occurs.

Preferably the plate PI.PU has a width, i.e. a dimension perpendicular to the engaging direction, which is approximately as large as the width of the inlet N.1. Therefore the plate PI.PU extends along the entire width of the inlet N.1. The plate PI.CU of the closing unit CU also has a width as large as the inlet N.1.

The plate PI.PU of the pushing unit PU has a free edge PLE which is the leading edge when the pushing unit PU is moved in the engaging direction ED towards the wrapping material conveying unit WU. The plate PI.CU of the closing unit CU has a free edge CLE which is the leading edge when the closing unit CU is moved into the closing position.

In one embodiment the leading edge PLE of the pushing unit PU has several protrusions. Due to these protrusions the leading edge PLE can have the shape of a comb or a fork. This embodiment guarantees that the leading edge PLE grasps the wrapping material in particular in the case that the wrapping material WM is a net.

In an alternative embodiment the leading edge PLE has a smooth surface without protrusions. This embodiment reduces the risk that the leading edge PLE penetrates or otherwise damages the wrapping material WM. Such damage may in particular occur if a protrusion of the leading edge PLE hits wrapping material WM having the shape of a plastic sheet.

In one embodiment the leading edge PLE of the plate PI.PU has the shape of a plane and flat rectangle if seen in a direction opposite to the engaging direction ED. In a further embodiment the leading edge PLE has a convex shape. Two different embodiment of a convex shape are possible and can be combined.

On the one hand the convex shape occurs seen in a viewing direction parallel to the pusher plate's plane and perpendicular to the engaging direction ED, i.e. convex if seen from lateral. This embodiment avoids that the pusher plate PI.PU has a sharp edge between a front edge and a surface which might injure a human or damage the wrapping material WM.

On the other hand a convex shape of the leading edge PLE may occur seen in a viewing direction perpendicular to the pusher plate's plane and perpendicular to the engaging direction ED, i.e. convex if seen from above. The central portion of the plate PI.PU has a smaller distance to the inlet N.1 than the two lateral edges arranged besides the plate PI.PU. This embodiment helps to shift the wrapping material WM laterally to the left and to the right - seen in the engaging direction ED.

In the embodiment the drives Dr.PU, Dr.CU each comprise a driven teethed wheel engaging corresponding teeth of the unit PU, CU. The corresponding teeth are inserted in one surface of the plate PI.CU, PI.PU. In one implementation the teethed wheels of the drives Dr.PU and Dr.CU can move the pushing unit PU as well as the closing unit CU in both directions, i.e. into the engaging position as well as into the parking position.

In a further embodiment the pushing unit PU is connected with a spring Sp.PU (cf. Fig. 3) which is connected with the baler's frame and with the pusher plate PI.PU. When extending the spring Sp.PU urges the plate PI.PU of the pushing unit PU in the engaging direction ED. The pusher plate PI.PU of the pushing unit PU can be locked in the parking position. The teethed wheel of the drive Dr.PU moves the plate PI.PU of the pushing unit PU in the disengaging direction against the force of the spring Sp.PU until the plate PI.PU has reached the parking position. The plate PI.PU is locked in the parking position, e.g. by at least one pawl. For moving the plate PI.PU of the pushing unit PU in the engaging direction ED the pushing unit PU is unlocked. The spring Sp.PU urges the plate PI.PU of the pushing unit PU rapidly into the engaging direction ED. This embodiment avoids an active drive which must quickly accelerate the plate PI.PU. A further spring (not shown) also connected with the baler's frame may be provided for moving the plate PI.CU of the closing unit CU into the closing position.

Fig. 2 shows a further embodiment of the closing unit CU and of pivoting the closing unit CU into the closing position. The plate PI.CU can be rotated in both directions around a pivoting axis which is perpendicular to the drawing plane of Fig. 2 and perpendicular to the engaging direction ED and to the travelling direction TD. In the situation shown in Fig. 2 the closing unit CU is in the parking position. The drive Dr.CU is adapted for rotating the plate PI.CU of the closing unit CU clockwise around this pivoting axis into the closing position. The plate of the closing unit CU is rigidly mounted on a shaft Sh.CU. The drive Dr.CU rotates the shaft Sh.CU together with the plate PI.CU around the pivoting axis. In this embodiment the plate PI.CU needs only to be moved over a quite short distance.

In yet a further embodiment (not shown) the plate PI.PU of the pushing unit PU is mounted on two levers. The plate PI.PU rigidly connects these two levers. The two levers are mounted on a shaft, e.g., and can be rotated around a horizontal rotating axis parallel to the bale's rotating axis. The rotation of the levers moves the plate PI.PU of the pushing unit PU in the engaging direction ED into the engaging position or back in the disengaging direction into the parking position.

During the step of creating the bale B in the pressing chamber both units CU, PU are in the parking position. The pulling rollers S.1, S.2 and the reel RL do not rotate. The wrapping material WM is clamped between the rollers S.1, S.2 but not moved. Debris rubbed off from the rotating bale B drops from above into the area Ar and onto the rotor FU and is conveyed back into the pressing chamber.

The bale creation is terminated if a termination condition is fulfilled, e.g. if the bale B in the chamber has reached a required diameter or if the operators triggers the generation of a termination signal. If the termination condition is fulfilled, a trigger signal is automatically generated. This trigger signal automatically triggers the execution of the following steps:
- The wrapping material supplying unit is switched into the supplying mode. The pulling rollers S.1, S.2 pull off the wrapping material WM from the reservoir RL. For this purpose the pulling rollers S.1, S.2 are set into rotation.
- The plate PI.CU of the closing unit CU is pivoted or shifted from the parking position towards the inlet N.1 and towards the wrapping material conveying unit WU into the closing position. The pivotal movement of the closing unit CU prevents the wrapping material WM from dropping into the area Ar. In this closing position the distance between the closing unit CU and the inlet N.1 and the distance between the closing unit CU and the wrapping material conveying unit WU is smaller than in the parking position.
- Afterwards the plate PI.PU of the pushing unit PU is quickly moved in the engaging direction ED into the engaging position and hits laterally the loose end area LEA.

Fig. 3 and Fig. 4 show two different embodiments of the closing unit CU and of its operating mode. In both embodiments the plate PI.CU of the closing unit CU can be moved linearly. In both embodiments first the closing unit plate PI.CU and afterwards the pushing unit plate PI.PU are moved. In the embodiment of Fig. 3 the closing unit CU operates as a further pushing unit and pushes the loose end area LEA before the pushing unit PU pushes it. In the situation shown in Fig. 3 the plate PI.CU of the closing CU laterally hits the leading portion LEA of the wrapping material WM. Even in the closing position the closing unit CU closes the area Ar only partially. The leading portion LEA passes the closing unit CU and is hit by the plate PI.CU before being hit by the plate PI.CU.

Fig. 4 shows an alternative embodiment in which the plate PI.CU of the closing unit CU touches the wrapping material conveying unit WU and closes entirely the area Ar. The closing unit CU comes below the leading portion LEA. In this alternative embodiment the closing unit CU does not operate as a further pushing unit but only as a closure for the area Ar.

Fig. 3 shows a situation where the drive Dr.CU has shifted or pivoted the plate PI.CU of the closing unit CU horizontally into the closing position. The lower leading edge of the wrapping material WM has already passed the leading edge CLE of the closing unit CU. The leading edge CLE of the plate PI.CU being shifted or pivoted hits the leading portion LEA laterally and lifts its lower edge and pushes the leading portion LEA towards the wrapping material conveying unit WU and towards the inlet N.1. By this hitting step the leading portion LEA is prevented from dropping into the area Ar. A gap between the leading edge CLE and the wrapping material conveying unit WU remains such that the wrapping material WM is not clamped between the closing unit CU and the wrapping material conveying unit WU.

Fig. 4 shows the alternative embodiment in a situation where the drive Dr.CU has shifted the plate PI.CU of the closing unit CU laterally into the closing position. The leading edge CLE of the closing unit CU touches the rotating wrapping material conveying unit WU. At least it touches the protruding rips of the rotating wrapping material conveying unit WU. Therefore the closing unit CU entirely closes the area Ar. The loose end area LEA cannot drop below the closing unit CU. The rotating wrapping material conveying unit WU further continues to clean the inlet N.1 from debris. In a variation a gap between the leading edge CLE and the rotating wrapping material conveying unit WU remains. The roller WU conveys the loose end area LEA towards the inlet N.1.

The embodiment in which the closing unit CU in the closing position entirely closes the area Ar can be implemented with a closing unit which is rotated around a pivoting axis (cf. Fig. 2) as well as with a closing unit CU which is moved linearly (cf. Fig. 1).

Preferably the leading edge CLE of the closing unit CU is made of an elastic material, e.g. of rubber, such that a close contact between the wrapping material conveying unit WU and the leading edge CLE can be implemented. The elastic leading edge CLE oscillates when touching the protrusions on the conveying surface. The leading edge CLE can also be shifted laterally away by the wrapping material conveying unit WU. The wrapping material conveying unit WU continues to rotate after being touched by the leading edge CLE.

In the embodiment shown in Fig. 4 the leading edge CLE of the closing unit CU reaches the wrapping material conveying unit WU and touches it before the leading portion LEA reaches the closing unit CU. The plate PI.CU of the closing unit CU reaches a position below the wrapping material WM before the increasing leading portion LEA reaches the plate PI.CU. Therefore the wrapping material WM drops from above onto the plate PI.CU of the closing unit CU and cannot be conveyed in a position where a part of the leading portion (loose end area LEA) of the wrapping material WM is below the closing unit CU. This inhibits the undesired event that at least one rotating rotor of the feeding unit FU grasps the wrapping material WM. This rotor is arranged below the closing unit CU and in the area Ar. As the closing unit CU entirely covers the area Ar, the leading portion LEA cannot drop into the area Ar. This protecting affect is achieved independently from the position of the leading portion LEA with respect to the inlet N.1.

In the embodiment of Fig. 4 the plate PI.CU of the closing unit CU is moved such that it reaches the closing position before the leading edge of the wrapping material WM reaches the closing unit CU.

It is preferable but not necessary that the closing unit CU touches the wrapping material conveying unit WU. It is further preferable but not necessary that the closing unit CU reaches the closing position before the leading portion LEA reaches the closing unit CU. An essential feature of the embodiment of Fig. 4 is that the closing unit CU comes into a position below the wrapping material WM before the leading portion LEA reaches the upper surface of the closing unit CU. This arrangement has the effect that the closing unit CU blocks the downward path of the leading portion LEA and inhibits the leading portion LEA from dropping or being moved into the area Ar.

The following description refers to the embodiment of Fig. 3 as well as to that of Fig. 4. After the closing unit CU has been pivoted into the closing position and the leading portion LEA of the wrapping material WM has reached the closing unit CU in the closing position, the plate PI.PU of the pushing unit PU is moved laterally from the parking position into the engaging position. The pushing unit PU performs a quick movement of the plate PI.PU in the engaging direction ED. Preferably the pushing unit PU performs a purely translational movement.

The plate PI.PU of the pushing unit PU hits the wrapping material WM such that In the moment of hitting a foremost part of the leading portion LEA of the wrapping material WM is below the plate PI.PU and the rest of the wrapping material WM is above the plate PI.PU of the pushing unit PU. Preferably the leading edge PLE hits the loose end area LEA such that the lower edge of the loose end area LEA is at least 20 cm below the leading edge PLE in the moment of hitting. By being hit the portion of the wrapping material WM being below the leading edge PLE is lifted - like a curtain which covers a window in the moment when the curtain is hit laterally. This causes the wrapping material WM to be spreaded laterally towards the bale rotating axis and towards the inlet N.1. The term "shifting laterally" refers to the vertical direction of the sagging loose end area LEA.

The movement of the plate PI.PU has two different effects:
- The loose end area LEA is shifted laterally.
- The inlet N.1 is cleaned from debris by the plate PI.PU such that no jam can occur.

The cleaning function of the pushing PU is achieved as the rigid plate PI.PU pushes debris and other material towards the inlet N.1. Preferably the plate PI.PU engages into the inlet N.1 during its movement in the engaging direction ED. This debris drops downwards or is pushed through the inlet N.1 into the pressing chamber and cannot inhibit the wrapping material WM from being injected through the inlet N.1 into the chamber. Preferably the width of the plate PI.PU is as large as the width of the inlet N.1 such that the entire width of the inlet N.1 is cleaned.

In one embodiment the leading edge PLE of the pushing unit PU has a convex shape seen in a viewing direction perpendicular to the plate's plane. The central part of the plate PI.PU has a smaller distance to the inlet N.1 than the two lateral edges of the plate PI.PU. This embodiment urges the wrapping material WM to be shifted laterally not only with respect to the vertical sagging direction but also with respect to the engaging direction ED. The term "shifting laterally" therefore can also refer to the engaging direction ED. Due to the convey shape of the plate PI.PU the wrapping material WM is shifted to the left and to the right seen in the engaging direction ED. The effect is that along the entire width of the inlet N.1 wrapping material WM is inserted into the pressing chamber. The entire circumferential surface of the rotating bale B is wrapped and no area adjacent to a front face of the bale B remains unwrapped.

As just mentioned the pushing unit PU shifts laterally the loose end area LEA towards the inlet N.1. In one embodiment the pushing unit PU shifts the loose end area LEA such that the wrapping material WM is tensioned in the area between the leading edge PLE of the pushing unit PU and the two rollers S.1, S.2 of the wrapping material supplying unit clamping the web of wrapping material. This embodiment can in particular be implemented
- if the leading edge PLE has the shape of a comb or a fork,
- if the wrapping material WM is a net and
- if the plate PI.PU is moved quickly enough.

In a further embodiment the loose end area LEA is not tensioned until the wrapping material WM reaches the space between the rotating bale B and the roller WU. Such a tension might stress the wrapping material WM. This further embodiment can in particular be implemented with a plane leading edge PLE of the pushing unit PU, i.e. a leading edge PLE without protrusions. Such protrusions can damage wrapping material WM which has the form of a plastic sheet.

In order to avoid a tension between the leading edge PLE and the rollers S.1, S.2 the following parameters are set in a proper way:
- The circumferential velocity of the rollers S.1, S.2 is sufficiently large such that the leading portion LEA increases sufficiently enough. In one embodiment the velocity of the circumferential surface of the rollers S.1, S.2 is larger than the velocity of the linear movement of the pushing unit PU in the engaging direction ED.
- The plate PI.PU hits the wrapping material WM so late that the loose end area LEA is sufficiently long enough. In particular the portion of the loose end area LEA between the rollers S.1, S.2 and the leading edge PLE is sufficiently long such that it is not tensioned by the plate PI.PU.

This embodiment in which a tension of the loose end area LEA is avoided can be combined with an embodiment in which the leading edge PLE has no protrusions and has a surface with a low friction coefficient. Therefore only a low friction between the pushing unit PU and the wrapping material WM occurs.

Fig. 5 shows a situation where the drive Dr.PU has shifted the plate PI.PU of the pushing unit PU laterally and horizontally in the engaging direction ED. The leading edge PLE of the pushing unit PU has reached the loose end area LEA and is shifting this loose end area LEA towards the inlet N.1. The wrapping material conveying unit WU has grasped the leading edge LEA of the wrapping material WM and is going to inject it through the inlet N.1 into the pressing chamber. The closing unit CU is still in the closing position. Fig. 5 shows an embodiment in which the leading edge CLE touches the wrapping material wrapping unit WU. The situation shown in Fig. 5 can also be achieved if a gap between the closing unit CU and the wrapping material conveying unit WU remains, in particular with a closing unit CU which hits laterally the leading portion LEA, cf. Fig. 3.

In this embodiment the leading edge PLE of the pushing unit PU preferably has several protrusions, e.g. has the shape of a comb. The leading edge PLE grasps the wrapping material WM during the movement in the engaging direction ED. In order to guide and directed to the inlet N.1.

The wrapping material conveying unit WU conveys the wrapping material WM towards the inlet N.1 for the wrapping material WM. The protrusions on the driven conveying surface CS help to convey the leading portion LEA of the wrapping material WM. The rotating bale B grasps the wrapping material WM. In one embodiment the wrapping material conveying unit WU now contributes to pulling off the wrapping material WM from the reservoir RL. The pulling rollers S.1, S.2 are switched off again and now operate as idler rollers which are rotated by the wrapping material WM.

After the rotating bale B has grasped the wrapping material WM, the closing unit CU and the pushing unit PU are retracted, i.e. are pivoted and moved back into the parking position. Preferably both units PU, CU are moved back as early as possible, i.e. as soon as the rotating bale B and a counter element in the chamber together have grasped and clamped the inserted web of wrapping material WM. This movement is performed by the drives Dr.PU and Dr.CU. The two units CU, PU can be retracted simultaneously or one after the other.

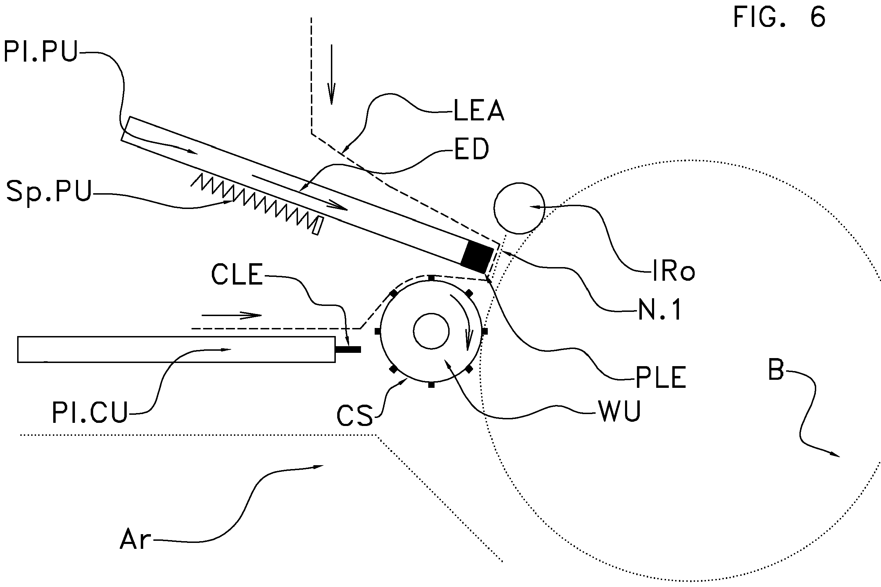

Fig. 6 shows a slightly different embodiment of the pushing unit PU. The basic idea of the embodiment shown in Fig. 6 is that the pushing unit PU forms a bulge in the loose end area LEA and pushes this bulge into the inlet N.1.

The plate PI.PU of the pushing unit PU is not necessarily moved horizontally but moved such that the engaging direction ED is perpendicular to the plane of the nip N.1 and to the surface of the rotating bale B. In the embodiment the engaging direction ED is therefore sloping downwards. The leading edge PLE of the pushing unit PU penetrates the inlet N.1. In one embodiment the leading edge PLE nearly touches the surface of the rotating bale B when having reached the engaging position. This embodiment further reduces the risk that debris in the inlet N.1 forms an obstacle for inserting the wrapping material WM through the inlet N.1 into the pressing chamber. The rigid plate PI.PU cleans the entire inlet N.1 by pushing debris being in the inlet N.1 into the pressing chamber. The plate PI.CU of the closing unit CU is also in this embodiment horizontal when being in the closing position.

The apparatus of this embodiment operates as follows: First the closing unit CU is pivoted into the closing position. The leading edge of the loose end area LEA touches the upper surface of the plate PI.CU, cf. the embodiment of Fig. 4. In the embodiment of Fig. 6 a gap between the leading edge CLE of the closing unit CU and the wrapping material conveying unit WU remains. Nevertheless the closing unit CU inhibits the loose end area LEA from dropping into the area Ar. The embodiment of Fig. 6 can also be combined with a version where the leading edge CLE touches the conveying surface CS of the wrapping material conveying unit WU.

The spring Sp.PU or the drive Dr.PU now moves the plate PI.PU of the pushing unit PU in the engaging direction ED sloping downwards. The plate PI.PU is moved towards and in one embodiment into the nip N.1. The loose end area LEA has a lower edge. The loose end area LEA is not tensioned but is slack. The plate PI.PU hits the loose end area LEA in a position above the lower edge. Preferably the plate PI.PU hits the loose end area LEA such that a distance of at least 20 cm between the lower edge and the leading edge PLE occurs. The laterally moved plate PI.PU forms a bulge into the loose end area LEA of the wrapping material WM. The kinetic energy of the moved pusher Plate PI.PU and the inertia of the sagging loose end area LEA form the bulge. This bulge is pushed into the inlet N.1. In one embodiment the plate PI.PU urges a top area of the bulge against the rotating bale B when having reached the engaging position. This top area is pressed against the surface of the bale B.

In the embodiment shown in Fig. 6 two layers of the wrapping material WM are simultaneously injected through the inlet N.1 into the space between the rotating wrapping material conveying unit WU and the rotating bale B. These two layers are simultaneously grasped by the rotating bale B. The bale B does not grasp the lower edge of the wrapping material WM but grasps two layers of an intermediate portion of the loose end area LEA. This embodiment even increases the probability that the wrapping material WM is grasped by the rotating bale.

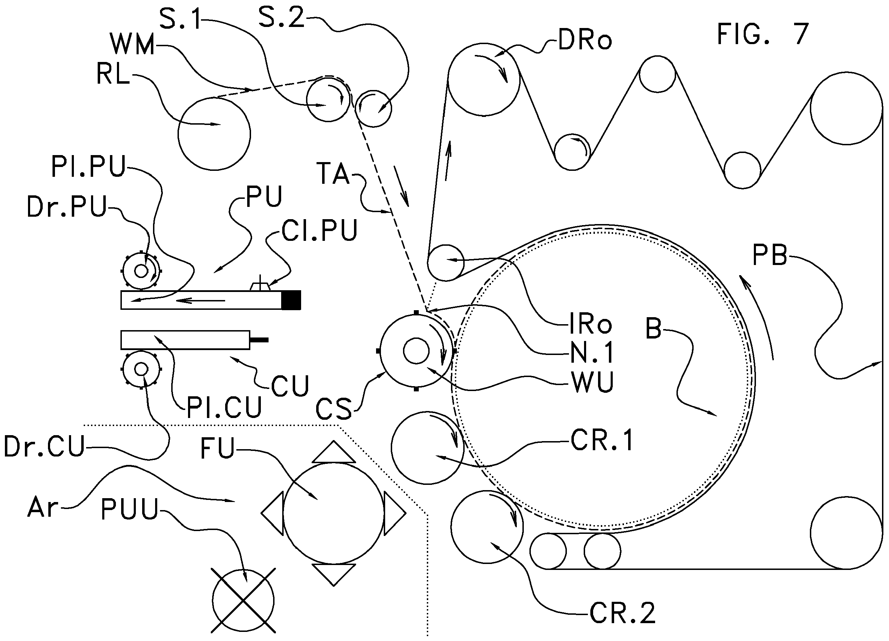

Fig. 7 shows a situation where one layer of wrapping material WM is already placed around the rotating bale B. An intermediate tensioning area TA of the wrapping material WM occurs and extends between the rollers S.1, S.2 and the wrapping material conveying unit WU. The bale B and the wrapping material conveying unit WU on the one side and the two rollers S.1, S.2 on the other side provide a tension for the intermediate area TA of the wrapping material WM which serves as a tensioning area. The rollers S.1, S.2 are no longer driven by a drive but are driven by the wrapping material WM. In one embodiment a disk brake decelerates at least one roller S.1, S.2. In the embodiment the wrapping material WM is tensioned after having being inserted into the pressing chamber but is not tensioned earlier.

The rollers S.1, S.2 provide a mechanical resistance. The wrapping material WM is pulled off against this resistance. The resistance yields the effect that the wrapping material WM is tensioned in the tension area TA. In particular the tension inhibits that the wrapping material WM can drop into the area Ar after the closing unit CU and the pushing unit PU are retracted into the parking position.

It is also possible that a disk brake decelerates the rotating reel RL such that the web of wrapping material WM is pulled from the reel RL against the force of this disk brake. The decelerated reel RL on the one hand and the bale B and the counter-element clamping the injecting wrapping material WM on the other hand together provide the tension for the web of wrapping material. The brake can be controlled by a control unit or by a pivotal member which deflects the web of wrapping material.

In the situation shown in Fig. 7 the drive Dr.CU has retracted the closing unit CU from the closing position to the parking position. The drive Dr.PU is just retracting the pushing unit PU in a disengaging direction from the engaging position into the parking position. By retracting the plate PI.CU of the closing unit CU and the plate PI.PU of the pushing unit PU the area Ar is released again. The retraction of the closing unit CU is performed because crop material rubbed off from the bale B can drop onto the feeding unit FU and is conveyed back into the pressing chamber or drops onto the ground. The retraction of the plate PI.PU of the pushing unit PU is performed such that the pushing unit PU can be moved again in the engaging direction ED later and during the step of wrapping the next bale.

In one embodiment the upper surfaces of the plate PI.CU of the closing unit CU and of the plate PI.PU of the pushing unit PU are cleaned during the step of retracting these plates PI.CU, PI.PU into the respective parking position. Fig. 5 shows a cleaning element CI.CU for the closing unit CU which cleans the upper surface of the plate PI.CU while the closing unit CU is retracted into the parking position. Fig. 5 further shows a cleaning element CI.PU for the pushing unit PU which cleans the upper surface of the plate PI.PU while the pushing unit PU is retracted into the parking position. In one embodiment every cleaning element CI.CU, CI.PU comprises a brush. The two cleaning elements CI.CU, CI.PU can be moved vertically into a cleaning position and into a parking position. It is possible but not necessary to move the cleaning elements CI.CU, CI.PU horizontally. As the plates PI.CU, PI.PU are cleaned while being moved away from the inlet, debris is removed from the upper surfaces and drops downwards. It is also possible to clean the upper surface of a plate PI.CU, PI.PU by means of a stream of a fluid, e.g. by pressurize air, or a sagging member.

Reference signs used in the claims will do not limit the scope of the claimed invention. The term "comprises" does not exclude other elements or steps. The articles "a", "an", and "one" do not exclude a plurality of elements.

**List of reference signs**

| | |
|---|---|
| Ar | area besides the wrapping material conveying unit WU into which the wrapping material WM must not drop |
| CLE | leading edge of the closing unit CU |
| CI.CU | cleaning element for the closing unit CU |
| CI.PU | cleaning element for the pushing unit PU |
| CR.1, CR.2 | conveying rollers (starter rollers), rotate the bale B |
| CS | conveying surface of the wrapping material conveying unit WU |
| CU | closing unit, comprises the plate PI.CU and the drive Dr.CU |
| Dr.CU | drive for the closing unit CU |
| Dr.PU | drive for the pushing unit PU |
| DRo | driven roller, drives the pressing belt PB |
| ED | engaging direction in which the pushing unit PU is moved |
| FU | feeding unit with several rotating rotors |
| IRo | idler roller besides the inlet N.1, deflects the pressing belt PB |
| LEA | loose end area of the wrapping material WM, sags down |
| N.1 | nip between the wrapping material conveying unit WU and the idle roller IRo, serves as an inlet for the wrapping material WM. |
| PB | pressing belt, is guided around the driven roller DRo and several idle rollers, among them the idle roller IRo. |
| PLE | leading edge of the pushing unit PU |
| PI.CU | plate of the closing unit CU |
| PI.PU | plate of the pushing unit PU |
| PU | pushing unit, comprises the plate PI.PU and the drive Dr.PU |
| PUU | pick-up unit |
| RL | reel of wrapping material WM, operates as a reservoir |
| S.1, S.2 | driven rollers, clamp and pull the web of wrapping material WM from the reel RL |
| Sh.CU | shaft on which the plate PI.CU of the closing unit CU is mounted, can be rotated around its longitudinal axis by the drive Dr.CU |
| Sp.PU | spring of the drive for the pushing unit PU, shifts the pushing unit PU rapidly into the engaging direction ED |
| TA | intermediate tensioning area in which the wrapping material WM is tensioned, extends between the wrapping material supply rollers S.1, S.2 and the inlet N.1 |
| TD | travelling direction of the baler |
| WM | wrapping material for wrapping the rotating bale B |
| WU | wrapping material conveying unit in the form of a roller, conveys the wrapping material WM towards the inlet N.1 by means of the conveying surface CS |

## Claims

1. Feeding apparatus for feeding wrapping material (WM) towards an inlet (N.1) of a chamber
in which chamber an object (B) is to be wrapped with wrapping material (WM),
the feeding apparatus comprises
- a wrapping material supplying unit (S.1, S.2) which can be operated in a supplying mode,
- a closing unit (CU) which can be operated in a closing position,
- a pushing unit (PU) which can be moved in an engaging direction (ED) towards the inlet (N.1), and
- a pushing unit drive (Sp.PU, Dr.PU) for moving the pushing unit (PU) in the engaging direction (ED),
the wrapping material supplying unit (S.1, S.2) operated in the supplying mode is arranged for supplying wrapping material (WM) from a reservoir (RL),
the feeding apparatus is arranged for supplying the wrapping material (WM) such that
- a leading portion of the wrapping material (WM) forms an increasing sagging loose end area (LEA),
- the loose end area (LEA) comes into a position between the pushing unit (PU) and the inlet (N.1), and
- the loose end area (LEA) further increases until the wrapping material (WM) has reached the chamber,
the pushing unit (PU) is adapted for pushing the loose end area (LEA) towards the inlet (N.1) when the pushing unit (PU) is moved in the engaging direction (ED),
the feeding apparatus is arranged such that the closing unit (CU) in the closing position
- is arranged below the pushing unit (PU) and
- closes at least partially an area (Ar) outside of the chamber and besides and/or below the inlet (N.1), and
the closing unit (CU) in the closing position thereby inhibits the loose end area (LEA) from dropping into the area (Ar), and
**characterized in that**
the closing unit (CU) can be operated in the closing position and in a parking position and
the feeding apparatus is further arranged such that
the closing unit (CU) in the parking position releases the area (Ar) besides and/or below the inlet (N.1)
such that debris and dirt can drop into this area (Ar).

2. Feeding apparatus according to claim 1,
**characterized in that**
the closing unit (CU) comprises a plate (PI.CU),
the closing unit (CU) is in the closing position if the plate (PI.CU) is in a closing position, the closing unit (CU) is in the parking position if the plate (PI.CU) is in a parking position, the plate (PI.CU) of the closing unit (CU) can be moved or shifted from the parking position into the closing position by being moved
- in the engaging direction (ED) or
- in a direction forming an arcuate angle with respect to the engaging direction (ED).

3. Feeding apparatus according to claim 2,
**characterized in that**
the plate (PI.CU) of the closing unit (CU) is arranged horizontally or is sloping towards the inlet (N.1) if the closing unit (CU) is in the closing position.

4. Feeding apparatus according to claim 2 or claim 3,
**characterized in that**
the plate (PI.CU) of the closing unit (CU) has an upper surface and
the feeding apparatus is arranged such that the increasing sagging loose end area (LEA) of the wrapping material (WM) is placed onto this upper surface of the plate (PI.CU)
before the loose end area (LEA) is pushed by the pushing unit (PU).

5. Feeding apparatus according to one of the preceding claims,
**characterized in that**
the feeding apparatus further comprises a wrapping material conveying unit (WU),
the wrapping material conveying unit (WU) comprehends a driven conveying surface (CS) for conveying the loose end area (LEA) of the wrapping material (WM) towards the inlet (N.1),
the feeding apparatus is arranged such that the conveying surface (CS) of the wrapping material conveying unit (WU) is situated between
- the inlet (N.1) and
- the area (Ar) which is at least partially covered by the closing unit (CU) when being in the closing position.

6. Feeding apparatus according to one of the preceding claims,
**characterized in that**
the pushing unit (PU) has a free edge (PLE),
this free edge (PLE) operates as the leading edge of the pushing unit (PU) if the pushing unit (PU) is moved in the engaging direction (ED), and
the feeding apparatus is adapted such that the leading edge (PLE) of the pushing unit (PU) hits the loose end area (LEA) of the wrapping material (WM)
while the pushing unit (PU) is moved in the engaging direction (ED).

7. Feeding apparatus according to one of the preceding claims,
**characterized in that**
the pushing unit (PU) can be moved in a disengaging direction which is opposite to the engaging direction (ED),
the pushing unit drive (Dr.PU) is further adapted for moving the pushing unit (PU) into the disengaging direction.

8. Feeding apparatus according to claim 7,
**characterized in that**
the apparatus comprises a pushing unit cleaning element (CI.PU),
an edge of the pushing unit cleaning element (CI.PU) can be moved into a cleaning position
such that this edge of the pushing unit cleaning element (CI.PU) touches the pushing unit (PU) from above,
the feeding apparatus is adapted for moving the pushing unit cleaning element (CI.PU) to the cleaning position when the pushing unit (PU) is moved in the disengaging direction
such that debris or dirt on the upper surface of the pushing unit (PU) is removed from the upper surface.

9. Feeding apparatus according to one of the preceding claims,
**characterized in that**
the pushing unit (PU) is adapted for hitting and pushing the loose end area (LEA) such that
- a bulge in the loose end area (LEA) is formed by the cinematic energy of the moved pushing unit (PU) and the inertia of the sagging loose end area (LEA),
- the formed bulge is shifted into the inlet (N.1), and
- two layers of wrapping material (WM) are inserted through the nip (N.1) into the chamber.

10. Feeding apparatus according to one of the preceding claims,
**characterized in that**
the closing unit (CU) can be pivoted from the parking position into the closing position by being rotated around a pivoting axis (Sh.CU).

11. Feeding apparatus according to one of the preceding claims,
**characterized in that**
the closing unit (CU) can be shifted from the parking position into the closing position by being guided along a trajectory which comprises a linear segment.

12. Feeding apparatus according to one of the preceding claims,
**characterized in that**
the feeding apparatus further comprises a closing unit drive (Dr.CU) for pivoting or shifting the closing unit (CU) into the closing position and into the parking position.

13. Feeding apparatus according to one of the preceding claims,
**characterized in that**
the feeding apparatus is arranged for
- first pivoting or shifting the closing unit (CU) into the closing position and
- afterwards moving the pushing unit (PU) in the engaging direction (ED).

14. Feeding apparatus according to one of the preceding claims,
**characterized in that**
the feeding apparatus further comprises a wrapping material conveying unit (WU),
the wrapping material conveying unit (WU) comprehends a driven conveying surface (CS) for conveying the loose end area (LEA) of the wrapping material (WM) towards the inlet (N.1),
the closing unit (CU) has a free edge (CLE),
the free edge (CLE) of the closing unit (CU) operates as the leading edge of the closing unit (CU) when the closing unit (CU) is pivoted or shifted into the closing position, and the feeding apparatus is adapted such that the leading edge (CLE) of the closing unit (CU) touches the surface (CS) of the wrapping material conveying unit (WU) when the closing unit (CU) is pivoted or shifted into the closing position.

15. Feeding apparatus according to one of the preceding claims,
**characterized in that**
the pushing unit (PU) has a free edge (PLE),
the free edge (PLE) of the pushing unit (PU) operates as the leading edge of the pushing unit (PU) if the pushing unit (PU) is moved in the engaging direction (ED), and the feeding apparatus is adapted such that
- first the leading edge (CLE) of the closing unit (CU) hits the loose end area (LEA) of the wrapping material (WM)
- and afterwards the leading edge (PLE) of the pushing unit (PU) hits the loose end area (LEA) of the wrapping material (WM).

16. Feeding apparatus according to one of the preceding claims,
**characterized in that**
the feeding apparatus comprises a closing unit cleaning element (CI.CU),
the closing unit (CU) comprises an upper surface,
an edge of the closing unit cleaning element (CI.CU) can be moved into a cleaning position
such that this edge of the closing unit cleaning unit (CI.CU) in the cleaning position touches the closing unit (CU) from above,
the feeding apparatus is adapted for the moving the closing unit cleaning element (CI.CU) into the cleaning position when the closing unit (CU) is pivoted or shifted into the parking position
such that debris or dirt on the upper surface of the closing unit (CU) is removed from this upper surface of the closing unit (CU).

17. Wrapping arrangement comprising
a chamber in which an object (B) is to be wrapped with wrapping material (WM),
an inlet (N.1) through which wrapping material (WM) can be inserted into the chamber, and
a feeding apparatus according to one of the preceding claims for feeding wrapping material (WM) towards the inlet (N.1).

18. Vehicle comprising the wrapping arrangement according to claim 17,
the vehicle is adapted
- for being moved over ground,
- for picking up loose material from the ground,
- for creating an object (B) in the chamber from the picked-up material, and
- for wrapping an object (B) created in the chamber.

19. Method for feeding wrapping material (WM) towards an inlet (N.1) of a chamber,
in which chamber an object (B) is to be wrapped with wrapping material (WM),
the method is performed by using a feeding apparatus which comprises
- a wrapping material supplying unit (S.1, S.2),
- a pushing unit (PU), and
- a closing unit (CU),
the method comprises the automatically performed steps that
the wrapping material supply unit (S.1, S.2) supplies wrapping material (WM) from a reservoir (RL),
the wrapping material (WM) is supplied such that
- a leading portion of the wrapping material (WM) forms an increasing sagging loose end area (LEA),
- the loose end area (LEA) comes into a position between the pushing unit (PU) and the inlet (N.1), and
- the sagging loose end area (LEA) further increases until the wrapping material (WM) has reached the chamber and
the pushing unit (PU) is moved in an engaging direction (ED) towards the inlet (N.1) such that the pushing unit (PU)
- hits the sagging loose end area (LEA) of the wrapping material (WM) and
- pushes it towards the inlet (N.1)
- while the pushing unit (PU) is moved in the engaging direction (ED),
the closing unit (CU) is operated in a closing position,
the closing unit (CU) in the closing position is arranged below the pushing unit (PU) and closes at least partially this area (Ar), and
the closing unit (CU) in the closing position inhibits the loose end area (LEA) from dropping into this area (Ar),
**characterized in that**
the closing unit (CU) is
- first operated in a parking position and
- afterwards operated in the closing position,
the closing unit (CU) in the parking position releases at least partially an area (Ar) which is situated outside of the chamber and besides and/or below the inlet (N.1) such that an object can drop into this area (Ar).

20. Method according to claim 19,
**characterized in that**
the closing unit (CU) is pivoted or shifted into the closing position before the wrapping material (WM) has reached the inlet (N.1), and
the pushing unit (PU) pushes the loose end area (LEA)
after the closing unit (CU) is pivoted into the closing position.

21. Method according to claim 20,
**characterized in that**
a free edge (PLE) of the pushing unit (PU) operates as the leading edge of the pushing unit (PU)
while the pushing unit (PU) is moved in the engaging direction (ED) and
the method comprises the further step that
the leading edge (PLE) of the pushing unit (PU) hits the loose end area (LEA) of the wrapping material (WM),
this hitting occurs while the pushing unit (PU) is moved in the engaging direction (ED) and after the closing unit (CU) has reached the closing position.

22. Method according to claim 20 or claim 21,
**characterized in that**
a free edge (CLE) of the closing unit (CU) operates as the leading edge of the closing unit (CU)
while the closing unit (CU) is pivoted or shifted into the closing position and
the method comprises the further step that
the leading edge (CLE) of the closing unit (CU) hits the loose end area (LEA) of the wrapping material (WM)
before the leading edge (PLE) of the pushing unit (PU) hits the loose end area (LEA) of the wrapping material (WM).

23. Method according to one of the claims 19 to 22,
**characterized in that**
the closing unit (CU) comprises a plate (PI.CU) which can be pivoted or shifted into a closing position and
the method comprises the further step that
the sagging and increasing loose end area (LEA) reaches the upper surface of this plate (PI.CU)
before the pushing unit (PU) hits the loose end area (LEA).

24. Method according to one of the claims 19 to 23,
**characterized in that**
the step of feeding wrapping material (WM) towards an inlet (N.1) comprises the step that
a wrapping material conveying unit (WU) conveys the loose end area (LEA) towards the inlet (N.1) and
this step of pivoting or shifting the closing unit (CU) into the closing position comprises the steps
that
the closing unit (CU)
- is pivoted or shifted into a position where the closing unit (CU) touches the wrapping material conveying unit (WU) and
- is stopped when having reached this touching position.

25. Method according to one of the claims 19 to 24,
**characterized in that**
the method further comprises the steps that
the closing unit (CU) is pivoted or shifted such that it reaches the closing position before the loose end area (LEA) reaches the closing unit (CU) and
the sagging loose end area (LEA) of the wrapping material (WM)
- is placed onto an upper surface of the closing unit (CU) and
- is afterwards pushed by the pushing unit (PU) towards the inlet (N.1).

26. Method according to one of the claims 19 to 25,
**characterized in that**
the step of pivoting or shifting the closing unit (CU) into the closing position comprehends the step that
the closing unit (CU) is rotated around a pivoting axis (Sh.CU).

27. Method according to one of the claims 19 to 26,
**characterized in that**
the step of pivoting or shifting the closing unit (CU) into the closing position is performed before
the step of moving the pushing unit (PU) in the engaging direction (ED) is started.

28. Method according to one of the claims 19 to 27,
**characterized in that**
after the pushing unit (PU) has hit the loose end area (LEA),
a driven conveying surface (CS) of a wrapping material conveying unit (WU) conveys the loose end area (LEA) of the wrapping material (WM) towards the inlet (N.1).

29. Method for wrapping an object (B) in a chamber with an inlet (N.1),
the method comprising the steps that
- wrapping material (WM) is fed towards the inlet (N.1) by applying a method according to one of the claims 19 to 28,
- the wrapping material (WM) is injected through the inlet (N.1) into the chamber, and
- the object (B) in the chamber is wrapped into the injected wrapping material (WM).

30. Method according to claim 29,
**characterized in that**
the object (B) is created in the chamber,
the closing unit (CU) is in the parking position and the pushing unit (PU) is also in a parking position
while the object (B) is created in the chamber,
the event that the creation of the object (B) in the chamber is completed triggers the two steps that
- the closing unit (CU) is pivoted or shifted into the closing position and
- the pushing unit (PU) is moved out of the parking position in the engaging direction (ED) and hits the loose end area (LEA).

## Patentansprüche

1. Zuführvorrichtung zum Zuführen von Verpackungsmaterial (WM) in Richtung eines Einlasses (N.1) einer Kammer, in der ein Objekt (B) zum Verpackungsmaterial (WM) verpackt werden soll,
wobei die Zuführvorrichtung umfasst:
- eine Verpackungsmaterial-Liefereinheit (S.1, S.2), die in einem Liefermodus betrieben werden kann,
- eine Schließeinheit (CU), die in einer Schließposition betrieben werden kann,
- eine Verschiebeeinheit (PU), die in eine Eingriffsrichtung (ED) in Richtung des Einlasses (N.1) bewegt werden kann,
- und einen Verschiebeeinheits-Antrieb (Sp.PU, Dr.PU) zum Bewegen der Verschiebeeinheit (PU) in die Eingriffsrichtung (ED),
wobei die im Liefermodus betriebene Verpackungsmaterial-Liefereinheit (S.1, S.2) dazu ausgestaltet ist, um von einem Reservoir (RL) Verpackungsmaterial (WM) zu liefern,
die Zuführvorrichtung angeordnet ist, um das Verpackungsmaterial (WM) so zu liefern, dass
- ein führender Abschnitt des Verpackungsmaterials (WM) einen zunehmenden durchhängenden losen Endbereich (LEA) bildet,
- der lose Endbereich (LEA) in eine Position zwischen der Verschiebeeinheit (PU) und dem Einlass (N.1) kommt, und
- der lose Endbereich (LEA) weiter wächst, bis das Verpackungsmaterial (WM) die Kammer erreicht hat,
die Verschiebeeinheit (PU) dazu ausgestaltet ist ist, den losen Endbereich (LEA) in Richtung des Einlasses (N.1) zu verschieben, wenn die Verschiebeeinheit (PU) in die Eingriffsrichtung (ED) bewegt wird,
die Zuführvorrichtung so angeordnet ist, dass die Schließeinheit (CU) in der Schließposition
- unter der Verschiebeeinheit (PU) angeordnet ist und
- mindestens teilweise einen Bereich (Ar) außerhalb der Kammer und neben und/oder unter dem Einlass (N.1) schließt, und
die Schließeinheit (CU) in der Schließposition dadurch verhindert, dass der lose Endbereich (LEA) in den Bereich (Ar) fällt, und
**dadurch gekennzeichnet, dass**
die Schließeinheit (CU) in der Schließposition und in einer Parkposition betrieben werden kann und die Zuführvorrichtung ferner so angeordnet ist, dass die Schließeinheit (CU) in der Parkposition den Bereich (Ar) neben und/oder unter dem Einlass (N.1) freigibt, so dass Bruchstücke und Schmutz in diesen Bereich (Ar) fallen können.

2. Zuführvorrichtung nach Anspruch 1,
**dadurch gekennzeichnet, dass**
die Schließeinheit (CU) eine Platte (P1.CU) umfasst,
die Schließeinheit (CU) in der Schließposition ist, wenn die Platte (Pl.CU) in einer Schließposition ist,
die Schließeinheit (CU) in der Parkposition ist, wenn die Platte (Pl.CU) in einer Parkposition ist, die Platte (Pl.CU) der Schließeinheit (CU) von der Parkposition in die Schließposition bewegt oder verschoben werden kann, indem sie
- in die Eingriffsrichtung (ED) oder
- in eine Richtung bewegt wird, die einen spitzen Winkel mit der Eingriffsrichtung (ED) bildet.

3. Zuführvorrichtung nach Anspruch 2,
**dadurch gekennzeichnet, dass**
die Platte (Pl.CU) der Schließeinheit (CU) horizontal angeordnet ist oder zum Einlass (N.1) geneigt ist, wenn sich die Schließeinheit (CU) in der Schließposition befindet.

4. Zuführvorrichtung nach Anspruch 2 oder Anspruch 3,
**dadurch gekennzeichnet, dass**
die Platte (Pl.CU) der Schließeinheit (CU) eine Oberseite aufweist, und
die Zuführvorrichtung so angeordnet ist, dass der zunehmende durchhängende lose Endbereich (LEA) des Verpackungsmaterials (WM) auf dieser Oberseite der Platte (Pl.CU) platziert wird, bevor der lose Endbereich (LEA) durch die Verschiebeeinheit (PU) verschoben wird.

5. Zuführvorrichtung nach einem der vorhergehenden Ansprüche,
**dadurch gekennzeichnet, dass**
die Zuführvorrichtung ferner eine Verpackungsmaterial-Fördereinheit (WU) umfasst,
die Verpackungsmaterial-Fördereinheit (WU) eine angetriebene Förder-Oberfläche (CS) zum Fördern des losen Endbereichs (LEA) des Verpackungsmaterials (WM) in Richtung des Einlasses (N.1) umfasst, die Zuführvorrichtung so angeordnet ist, dass die Förder-Oberfläche (CS) der Verpackungsmaterial-Fördereinheit (WU) sich zwischen
- dem Einlass (N.1) und
- dem Bereich (Ar) befindet, der mindestens teilweise durch die Schließeinheit (CU) bedeckt wird, wenn sie in der Schließposition ist.

6. Zuführvorrichtung nach einem der vorhergehenden Ansprüche,
**dadurch gekennzeichnet, dass**
die Verschiebeeinheit (PU) einen freien Rand (PLE) aufweist,
dieser freie Rand (PLE) als führender Rand der Verschiebeeinheit (PU) wirkt, wenn die Verschiebeeinheit (PU) in die Eingriffsrichtung (ED) bewegt wird, und
die Zuführvorrichtung adaptiert ist, dass der führende Rand (PLE) der Verschiebeeinheit (PU) auf den losen Endbereich (LEA) des Verpackungsmaterials (WM) trifft, während die Verschiebeeinheit (PU) in die Eingriffsrichtung (ED) bewegt wird.

7. Zuführvorrichtung nach einem der vorhergehenden Ansprüche,
**dadurch gekennzeichnet, dass**
die Verschiebeeinheit (PU) in eine Freigaberichtung bewegt werden kann, die der Eingriffsrichtung (ED) entgegengesetzt ist,
der Verschiebeeinheits-Antrieb (Dr.PU) ferner adaptiert ist, um die Verschiebeeinheit (PU) in die Freigaberichtung zu bewegen.

8. Zuführvorrichtung nach Anspruch 7,
**dadurch gekennzeichnet, dass**
die Vorrichtung ein Verschiebeeinheit-Reinigungselement (Cl.PU) umfasst,
eine Kante des Schiebereinheit-Reinigungselements (Cl.PU) in eine Reinigungsposition bewegt werden kann,
so dass diese Kante des Verschiebeeinheit-Reinigungselements (Cl.PU) die Verschiebeeinheit (PU) von oben berührt,
die Zuführvorrichtung dazu ausgestaltet ist, um das Verschiebeeinheit-Reinigungselement (Cl.PU) in die Reinigungsposition zu bewegen, wenn die Verschiebeeinheit (PU) in die Freigaberichtung bewegt wird, so dass Bruchstücke und Schmutz auf der Oberseite der Verschiebeeinheit (PU) von der Oberseite entfernt werden.

9. Zuführvorrichtung nach einem der vorhergehenden Ansprüche,
**dadurch gekennzeichnet, dass**
die Verschiebeeinheit (PU) dazu ausgestaltet ist, den losen Endbereich (LEA) zu treffen und diesen zu verschieben, so dass
- durch die kinetische Energie der bewegten Verschiebeeinheit (PU) und die Trägheit des herunterhängenden losen Endbereichs (LEA) eine Wölbung in dem losen Endbereich (LEA) gebildet wird,
- die gebildete Wölbung in den Einlass (N.1) verschoben wird und
- zwei Schichten von Verpackungsmaterial (WM) durch den Spalt (N.1) in die Kammer eingeführt werden.

10. Zuführvorrichtung nach einem der vorhergehenden Ansprüche,
**dadurch gekennzeichnet, dass**
die Schließeinheit (CU) von der Parkposition in eine Schließposition verschwenkt werden kann, indem sie um eine Verschwenkachse (Sh.CU) gedreht wird.

11. Zuführvorrichtung nach einem der vorhergehenden Ansprüche,
**dadurch gekennzeichnet, dass**
die Schließeinheit (CU) von der Parkposition in eine Schließposition verschoben werden kann, indem sie entlang einer Bahnkurve geführt wird, die ein lineares Segment umfasst.

12. Zuführvorrichtung nach einem der vorhergehenden Ansprüche,
**dadurch gekennzeichnet, dass**
die Zuführvorrichtung ferner einen Schließeinheits-Antrieb (Dr.CU) zum Verschwenken oder Verschieben der Schließeinheit (CU) in die Schließposition und in die Parkposition umfasst.

13. Zuführvorrichtung nach einem der vorhergehenden Ansprüche,
**dadurch gekennzeichnet, dass**
die Zuführvorrichtung dazu ausgestaltet ist,
- zuerst die Schließeinheit (CU) in die Schließposition zu verschwenken oder zu verschieben und
- danach die Schießeinheit (PU) in die Eingriffsrichtung (ED) zu bewegen.

14. Zuführvorrichtung nach einem der vorhergehenden Ansprüche,
**dadurch gekennzeichnet, dass**
die Zuführvorrichtung eine Verpackungsmaterial-Fördereinheit (WU) umfasst,
die Verpackungsmaterial-Fördereinheit (WU) eine angetriebene Förder-Oberfläche (CS) zum Fördern des losen Endbereichs (LEA) des Verpackungsmaterials (WM) in Richtung des Einlasses (N.1) umfasst, die Schließeinheit (CU) eine freie Kante (CLE) aufweist,
die freie Kante (CLE) der Schließeinheit (CU) als führende Kante der Schließeinheit (CU) arbeitet, wenn die Schließeinheit (CU) in die Schließposition verschwenkt oder verschoben wird, und
die Zuführvorrichtung so ausgestaltet ist, dass der führende Rand (CLE) der Schließeinheit (CU) die Oberfläche (CS) der Verpackungsmaterial-Fördereinheit (WU) berührt, wenn die Schließeinheit (CU) in die Schließposition verschwenkt oder verschoben wird.

15. Zuführvorrichtung nach einem der vorhergehenden Ansprüche,
**dadurch gekennzeichnet, dass**
die Verschiebeeinheit (PU) eine freie Kante (PLE) aufweist,
die freie Kante (PLE) der Verschiebeeinheit (PU) als führende Kante der Verschiebeeinheit (PU) wirkt, wenn die Verschiebeeinheit (PU) in die Eingriffsrichtung (ED) bewegt wird, und
die Zuführvorrichtung so ausgestaltet ist, so dass
- erst die führende Kante (CLE) der Schließeinheit (CU) auf den losen Endbereich (LEA) des Verpackungsmaterials (WM) trifft und
- danach die führende Kante (PLE) der Verschiebeeinheit (PU) auf den losen Endbereich (LEA) des Verpackungsmaterials (WM) trifft.

16. Zuführvorrichtung nach einem der vorhergehenden Ansprüche,
**dadurch gekennzeichnet, dass**
die Zuführvorrichtung ein Schließeinheit-Reinigungselement (Cl.CU) umfasst,
die Schließeinheit (CU) eine Oberseite umfasst, eine Kante des Schließeinheit-Reinigungselements (Cl.CU) in eine Reinigungsposition bewegt werden kann, so dass die Kante der Schließeinheit-Reinigungselement (Cl.CU) in der Reinigungsposition die Schließeinheit (CU) von oben berührt,
die Zuführvorrichtung adaptiert ist, um das Schließeinheit-Reinigungselement (Cl.CU) in die Reinigungsposition zu bewegen, wenn die Schließeinheit (CU) in die Parkposition verschwenkt oder verschoben wird, so dass Bruchstücke oder Schmutz auf der Oberseite der Schließeinheit (CU) von dieser Oberseite der Schließeinheit (CU) entfernt werden.

17. Verpackungsanordnung umfassend
eine Kammer, in der ein Objekt (B) mit Verpackungsmaterial (WM) verpackt werden soll,
einen Einlass (N.1), durch den Verpackungsmaterial (WM) in die Kammer eingeführt werden kann und
eine Zuführvorrichtung nach einem der vorhergehenden Ansprüche zum Zuführen von Verpackungsmaterial (WM) in Richtung des Einlasses (N.1).

18. Fahrzeug, umfassend die Verpackungsanordnung nach Anspruch 17,
wobei das Fahrzeug dazu ausgestaltet ist,
- über den Boden bewegt zu werden,
- loses Material von dem Boden aufzusammeln,
- ein Objekt (B) in der Kammer aus dem aufgesammelten Material zu erzeugen und
- ein in der Kammer erzeugtes Objekt (B) zu verpacken.

19. Verfahren zum Zuführen von Verpackungsmaterial (WM) in Richtung eines Einlasses (N.1) einer Kammer,
wobei in der Kammer ein Objekt (B) mit Verpackungsmaterial (WM) verpackt werden soll,
wobei das Verfahren unter Verwendung einer Zuführvorrichtung durchgeführt wird, welche umfasst:
- eine Verpackungsmaterial-Liefereinheit (S.1, S.2),
- eine Verschiebeeinheit (PU) und
- eine Schließeinheit (CU),
wobei das Verfahren die automatisch durchgeführten Schritte umfasst, dass
die Verpackungsmaterial-Liefereinheit (S.1, S.2) Verpackungsmaterial (WM) aus einem Reservoir (RL) liefert,
das Verpackungsmaterial (WM) so geliefert wird, dass
- ein führender Abschnitt des Verpackungsmaterials (WM) einen zunehmenden herunterhängenden losen Bereich (LEA) bildet,
- der lose Endbereich (LEA) in eine Position zwischen der Verschiebeeinheit (PU) und dem Einlass (N.1) kommt und
- der herabhängende lose Endbereich (LEA) weiter zunimmt, bis das Verpackungsmaterial (WM) die Kammer erreicht hat, und
die Verschiebeeinheit (PU) in eine Eingriffsrichtung (ED) in Richtung des Einlasses (N.1) bewegt wird, so dass die Verschiebeeinheit (PU)
- auf den durchhängenden losen Endbereich (LEA) des Verpackungsmaterials (WM) trifft und
- ihn in Richtung des Einlasses (N.1) verschiebt,
- während die Verschiebeeinheit (PU) in die Eingriffsrichtung (ED) bewegt wird,
die Schließeinheit (CU) in einer Schließposition betrieben wird,
die Schließeinheit (CU) in der Schließposition unter der Verschiebeeinheit (PU) angeordnet ist und diesen Bereich (Ar) mindestens teilweise schließt, und
die Schließeinheit (CU) in der Schließposition verhindert, dass der lose Endbereich (LEA) in den Bereich (Ar) fällt, **dadurch gekennzeichnet, dass** die Schließeinheit (CU)
- erst in einer Parkposition und
- danach in der Schließposition betrieben wird, die Schließeinheit (CU) in der Parkposition mindestens teilweise einen Bereich (Ar) loslässt, der sich außerhalb der Kammer und neben und/oder unter dem Einlass (N.1) befindet, so dass ein Objekt in diesen Bereich (Ar) fallen kann.

20. Verfahren nach Anspruch 19,
**dadurch gekennzeichnet, dass**
die Schließeinheit (CU) in die Schließposition verschwenkt oder verschoben worden ist, bevor das Verpackungsmaterial (WM) den Einlass (N.1) erreicht hat, und
die Verschiebeeinheit (PU) den losen Endbereich (LEA) verschiebt,
nachdem die Schließeinheit (CU) in die Schließposition verschwenkt worden ist.

21. Verfahren nach Anspruch 20,
**dadurch gekennzeichnet, dass**
eine freie Kante (PLE) der Verschiebeeinheit (PU) als führende Kante der Verschiebeeinheit (PU) betrieben wird,
während die Verschiebeeinheit (PU) in die Eingriffsrichtung (ED) bewegt wird und
das Verfahren den weiteren Schritt umfasst, dass die führende Kante (PLE) der Verschiebeeinheit (PU) auf den losen Endbereich (LEA) des Verpackungsmaterials (WM) trifft,
wobei dieses Auftreffen stattfindet, während die Verschiebeeinheit (PU) in die Eingriffsrichtung (ED) bewegt wird und nachdem die Schließeinheit (CU) die Schließposition erreicht hat.

22. Verfahren nach Anspruch 20 oder Anspruch 21,
**dadurch gekennzeichnet, dass**
eine freie Kante (CLE) der Schließeinheit (CU) als führende Kante der Schließeinheit (CU) arbeitet, während die Schließeinheit (CU) in die Schließposition verschwenkt oder verschoben wird, und
das Verfahren den weiteren Schritt umfasst, dass die führende Kante (CLE) der Schließeinheit (CU) auf den losen Endbereich (LEA) des Verpackungsmaterials (WM) trifft,
bevor die führende Kante (PLE) der Verschiebeeinheit (PU) auf den losen Endbereich (LEA) des Verpackungsmaterials (WM) trifft.

23. Verfahren nach einem der Ansprüche 19 bis 22,
**dadurch gekennzeichnet, dass**
die Schließeinheit (CU) eine Platte (Pl.CU) umfasst, die in eine Schließposition verschwenkt oder verschoben werden kann, und
das Verfahren den weiteren Schritt umfasst, dass der herabhängende und zunehmende lose Endbereich (LEA) die Oberseite dieser Platte (Pl.CU) erreicht, bevor die Verschiebeeinheit (PU) auf den losen Endbereich (LEA) trifft.

24. Verfahren nach einem der Ansprüche 19 bis 23,
**dadurch gekennzeichnet, dass**
der Schritt des Zuführens von Verpackungsmaterial (WM) in Richtung eines Einlasses (N.1) den Schritt umfasst, dass
eine Verpackungsmaterial-Fördereinheit (WU) den losen Endbereich (LEA) in Richtung des Einlasses (N.1) fördert, und
dieser Schritt des Verschwenkens oder Verschiebens der Schließeinheit (CU) in die Schließposition die Schritte umfasst, dass die Schließeinheit (CU)
- in eine Position verschwenkt oder verschoben wird, in welcher die Schließeinheit (CU) die Verpackungsmaterial-Fördereinheit (WU) berührt und
- gestoppt wird, wenn sie diese Berührungsposition erreicht hat.

25. Verfahren nach einem der Ansprüche 19 bis 24,
**dadurch gekennzeichnet, dass**
das Verfahren ferner die Schritte umfasst, dass die Schließeinheit (CU) verschwenkt oder verschoben wird, so dass sie die Schließposition erreicht, bevor der lose Endbereich (LEA) die Schließeinheit (CU) erreicht und der durchhängende lose Endbereich (LEA) des Verpackungsmaterials (WM)
- auf einer Oberseite der Schließeinheit (CU) platziert wird und
- danach durch die Verschiebeeinheit (PU) in Richtung des Einlasses (N.1) verschoben wird.

26. Verfahren nach einem der Ansprüche 19 bis 25,
**dadurch gekennzeichnet, dass**
der Schritt des Schwenkens oder Verschiebens der Schließeinheit (CU) in die Schließposition den Schritt umfasst,
dass die Schließeinheit (CU) um eine Schwenkachse (Sh.CU) gedreht wird.

27. Verfahren nach einem der Ansprüche 19 bis 26,
**dadurch gekennzeichnet, dass**
der Schritt des Verschwenkens oder Verschiebens der Schließeinheit (CU) in die Schließposition durchgeführt wird,
bevor der Schritt des Bewegens der Verschiebeeinheit (PU) in die Eingriffsrichtung (ED) gestartet wird.

28. Verfahren nach einem der Ansprüche 19 bis 27,
**dadurch gekennzeichnet, dass**
eine angetriebene Förder-Oberfläche (CS) einer Verpackungsmaterial-Fördereinheit (WU) den losen Endbereich (LEA) des Verpackungsmaterials (WM) in Richtung des Einlasses (N.1) fördert,
nachdem die Verschiebeeinheit (PU) den losen Endbereich (LEA) getroffen hat.

29. Verfahren zum Verpacken eines Objekts (B) in einer Kammer mit einem Einlass (N.1),
wobei das Verfahren die Schritte umfasst, dass
- Verpackungsmaterial (WM) in Richtung des Einlasses (N.1) zugeführt wird, indem ein Verfahren gemäß einem der Ansprüche 19 bis 28 angewendet wird,
- das Verpackungsmaterial (WM) durch den Einlass (N.1) in die Kammer eingeführt wird und
- das Objekt (B) in der Kammer in das eingeführte Verpackungsmaterial (WM) verpackt wird.

30. Verfahren nach Anspruch 29,
**dadurch gekennzeichnet, dass**
das Objekt (B) in der Kammer erzeugt wird,
die Schließeinheit (CU) in der Parkposition ist und die Verschiebeeinheit (PU) auch in einer Parkposition ist, während das Objekt (B) in der Kammer erzeugt wird,
das Ereignis, dass die Erzeugung des Objekts (B) in der Kammer abgeschlossen ist, die beiden Schritte auslöst, dass
- die Schließeinheit (CU) in die Schließposition verschwenkt oder verschoben wird und
- die Verschiebeeinheit (PU) aus der Parkposition heraus in die Eingriffsrichtung (ED) bewegt wird und auf den losen Endbereich (LEA) trifft.

## Revendications

1. Appareil d'alimentation pour amener un matériau d'emballage (WM) en direction d'une entrée (N.1) d'une chambre, chambre dans laquelle un objet (B) doit être emballé avec un matériau d'emballage (WM),
l'appareil d'alimentation comprenant
- une unité de fourniture de matériau d'emballage (S.1, S.2) qui peut être actionnée dans un mode d'alimentation,
- une unité de fermeture (CU) qui peut être actionnée dans une position de fermeture,
- une unité de poussée (PU) qui peut être déplacée dans une direction d'engagement (ED) en direction de l'entrée (N.1), et
- une commande d'unité de poussée (Sp.PU, Dr.PU) pour déplacer l'unité de poussée (PU) dans la direction d'engagement (ED),
l'unité de fourniture de matériau d'emballage (S.1, S.2) actionnée dans le mode d'alimentation est agencée de manière à fournir un matériau d'emballage (WM) à partir d'un réservoir (RL),
l'appareil d'alimentation est agencé de manière à fournir le matériau d'emballage (WM) de telle sorte que
- une partie avant du matériau d'emballage (WM) forme une région d'extrémité lâche d'affaissement croissante (LEA),
- la région d'extrémité lâche (LEA) vienne se placer dans une position entre l'unité de poussée (PU) et l'entrée (N.1), et
- la région d'extrémité lâche (LEA) augmente encore jusqu'à ce que le matériau d'emballage (WM) ait atteint la chambre,
l'unité de poussée (PU) est apte à pousser la région d'extrémité lâche (LEA) en direction de l'entrée (N.1) lorsque l'unité de poussée (PU) est déplacée dans la direction d'engagement (ED),
l'appareil d'alimentation est agencé de telle sorte que l'unité de fermeture (CU) dans la position de fermeture
- soit agencée en dessous de l'unité de poussée (PU), et
- ferme au moins partiellement une région (Ar) à l'extérieur de la chambre et à côté et/ou en dessous de l'entrée (N.1), et
l'unité de fermeture (CU) dans la position de fermeture empêche de ce fait la région d'extrémité lâche (LEA) de tomber dans la région (Ar), et
**caractérisé en ce que**
l'unité de fermeture (CU) peut être actionnée dans la position de fermeture et dans une position de parking, et
l'appareil d'alimentation est en outre agencé de telle sorte que
l'unité de fermeture (CU) dans la position de parking libère la région (Ar) à côté et/ou en dessous de l'entrée (N.1) de telle sorte que des débris et de la saleté puissent tomber dans cette région (Ar).

2. Appareil d'alimentation selon la revendication 1,
**caractérisé en ce que**
l'unité de fermeture (CU) comprend une plaque (Pl.CU),
l'unité de fermeture (CU) se trouve dans la position de fermeture si la plaque (Pl.CU) se trouve dans une position de fermeture,
l'unité de fermeture (CU) se trouve dans la position de parking si la plaque (Pl.CU) se trouve dans une position de parking,
la plaque (Pl.CU) de l'unité de fermeture (CU) peut être déplacée ou décalée à partir de la position de parking dans la position de fermeture en étant déplacée
- dans la direction d'engagement (ED), ou
- dans une direction qui forme un angle courbe par rapport à la direction d'engagement (ED).

3. Appareil d'alimentation selon la revendication 2,
**caractérisé en ce que**
la plaque (Pl.CU) de l'unité de fermeture (CU) est agencée horizontalement ou est inclinée en direction de l'entrée (N.1) si l'unité de fermeture (CU) se trouve dans la position de fermeture.

4. Appareil d'alimentation selon la revendication 2 ou la revendication 3,
**caractérisé en ce que**
la plaque (Pl.CU) de l'unité de fermeture (CU) présente une surface supérieure, et
l'appareil d'alimentation est agencé de telle sorte que la région d'extrémité lâche d'affaissement croissante (LEA) du matériau d'emballage (WM) soit placée sur cette surface supérieure de la plaque (Pl.CU) avant que la région d'extrémité lâche (LEA) soit poussée par l'unité de poussée (PU).

5. Appareil d'alimentation selon l'une quelconque des revendications précédentes,
**caractérisé en ce que**
l'appareil d'alimentation comprend en outre une unité de transport de matériau d'emballage (WU),
l'unité de transport de matériau d'emballage (WU) présente une surface de transport entraînée (CS) pour transporter la région d'extrémité lâche (LEA) du matériau d'emballage (WM) en direction de l'entrée (N.1),
l'appareil d'alimentation est agencé de telle sorte que la surface de transport (CS) de l'unité de transport de matériau d'emballage (WU) soit située entre
- l'entrée (N.1), et
- la région (Ar) qui est au moins partiellement couverte par l'unité de fermeture (CU) lorsqu'elle se trouve dans la position de fermeture.

6. Appareil d'alimentation selon l'une quelconque des revendications précédentes,
**caractérisé en ce que**
l'unité de poussée (PU) présente un chant libre (PLE),
ce chant libre (PLE) agit comme le chant d'attaque de l'unité de poussée (PU) si l'unité de poussée (PU) est déplacée dans la direction d'engagement (ED), et
l'appareil d'alimentation est adapté de telle sorte que le chant d'attaque (PLE) de l'unité de poussée (PU) heurte la région d'extrémité lâche (LEA) du matériau d'emballage (WM) pendant que l'unité de poussée (PU) est déplacée dans la direction d'engagement (ED).

7. Appareil d'alimentation selon l'une quelconque des revendications précédentes,
**caractérisé en ce que**
l'unité de poussée (PU) peut être déplacée dans une direction de désengagement qui est opposée à la direction d'engagement (ED), et
la commande d'unité de poussée (Dr.PU) est en outre apte à déplacer l'unité de poussée (PU) dans la direction de désengagement.

8. Appareil d'alimentation selon la revendication 7,
**caractérisé en ce que**
l'appareil comprend un élément de nettoyage d'unité de poussée (CI.PU),
un chant de l'élément de nettoyage d'unité de poussée (CI.PU) peut être déplacé dans une position de nettoyage de telle sorte que ce chant de l'élément de nettoyage d'unité de poussée (CI.PU) touche l'unité de poussée (PU) par le dessus, et
l'appareil d'alimentation est apte à déplacer l'élément de nettoyage d'unité de poussée (CI.PU) jusqu'à la position de nettoyage lorsque l'unité de poussée (PU) est déplacée dans la direction de désengagement de telle sorte que des débris ou de la saleté sur la surface supérieure de l'unité de poussée (PU) soient enlevés de la surface supérieure.

9. Appareil d'alimentation selon l'une quelconque des revendications précédentes,
**caractérisé en ce que**
l'unité de poussée (PU) est apte à heurter et à pousser la région d'extrémité lâche (LEA) de telle sorte que
- une bosse dans la région d'extrémité lâche (LEA) soit formée par l'énergie cinétique de l'unité de poussée déplacée (PU) et l'inertie de la région d'extrémité lâche d'affaissement (LEA),
- la bosse formée est déplacée dans l'entrée (N.1), et
- deux couches de matériau d'emballage (WM) sont insérées à travers le pinçage (N.1) dans la chambre.

10. Appareil d'alimentation selon l'une quelconque des revendications précédentes,
**caractérisé en ce que**
l'unité de fermeture (CU) peut être pivotée à partir de la position de parking dans la position de fermeture en étant tournée autour d'un axe de pivotement (Sh.CU).

11. Appareil d'alimentation selon l'une quelconque des revendications précédentes,
**caractérisé en ce que**
l'unité de fermeture (CU) peut être déplacée à partir de la position de parking dans la position de fermeture en étant guidée le long d'une trajectoire qui comprend un segment linéaire.

12. Appareil d'alimentation selon l'une quelconque des revendications précédentes,
**caractérisé en ce que**
l'appareil d'alimentation comprend en outre une commande d'unité de fermeture (Dr.CU) pour faire pivoter ou déplacer l'unité de fermeture (CU) dans la position de fermeture et dans la position de parking.

13. Appareil d'alimentation selon l'une quelconque des revendications précédentes,
**caractérisé en ce que**
l'appareil d'alimentation est agencé pour
- d'abord faire pivoter ou déplacer l'unité de fermeture (CU) dans la position de fermeture; et ensuite
- déplacer l'unité de poussée (PU) dans la direction d'engagement (ED).

14. Appareil d'alimentation selon l'une quelconque des revendications précédentes,
**caractérisé en ce que**
l'appareil d'alimentation comprend en outre une unité de transport de matériau d'emballage (WU),
l'unité de transport de matériau d'emballage (WU) présente une surface de transport entraînée (CS) pour transporter la région d'extrémité lâche (LEA) du matériau d'emballage (WM) en direction de l'entrée (N.1),
l'unité de fermeture (CU) présente un chant libre (CLE),
le chant libre (CLE) de l'unité de fermeture (CU) agit comme le chant d'attaque de l'unité de fermeture (CU) lorsque l'unité de fermeture (CU) est pivotée ou décalée dans la position de fermeture, et
l'appareil d'alimentation est adapté de telle sorte que le chant d'attaque (CLE) de l'unité de fermeture (CU) touche la surface (CS) de l'unité de transport de matériau d'emballage (WU) lorsque l'unité de fermeture (CU) est pivotée ou décalée dans la position de fermeture.

15. Appareil d'alimentation selon l'une quelconque des revendications précédentes,
**caractérisé en ce que**
l'unité de poussée (PU) présente un chant libre (PLE),
le chant libre (PLE) de l'unité de poussée (PU) agit comme le chant d'attaque de l'unité de poussée (PU) si l'unité de poussée (PU) est déplacée dans la direction d'engagement (ED), et
l'appareil d'alimentation est adapté de telle sorte que
- d'abord le chant d'attaque (CLE) de l'unité de fermeture (CU) heurte la région d'extrémité lâche (LEA) du matériau d'emballage (WM), et ensuite
- le chant d'attaque (PLE) de l'unité de poussée (PU) heurte la région d'extrémité lâche (LEA) du matériau d'emballage (WM).

16. Appareil d'alimentation selon l'une quelconque des revendications précédentes,
**caractérisé en ce que**
l'appareil d'alimentation comprend un élément de nettoyage d'unité de fermeture (Cl.CU),
l'unité de fermeture (CU) présente une surface supérieure,
un chant de l'élément de nettoyage d'unité de fermeture (Cl.CU) peut être déplacé dans une position de nettoyage de telle sorte que ce chant de l'unité de nettoyage d'unité de fermeture (Cl.CU) dans la position de nettoyage touche l'unité de fermeture (CU) par le dessus, et
l'appareil d'alimentation est apte à déplacer l'élément de nettoyage d'unité de fermeture (Cl.CU) dans la position de nettoyage lorsque l'unité de fermeture (CU) est pivotée ou décalée dans la position de parking de telle sorte que des débris ou de la saleté sur la surface supérieure de l'unité de fermeture (CU) soient enlevés de cette surface supérieure de l'unité de fermeture (CU).

17. Agencement d'emballage, comprenant
une chambre dans laquelle un objet (B) doit être emballé avec un matériau d'emballage (WM),
une entrée (N.1) à travers laquelle un matériau d'emballage (WM) peut être inséré dans la chambre, et
un appareil d'alimentation selon l'une quelconque des revendications précédentes pour amener un matériau d'emballage (WM) en direction de l'entrée (N.1).

18. Véhicule comprenant l'agencement d'emballage selon la revendication 17,
le véhicule étant apte
- à être déplacé sur le sol,
- à ramasser un matériau en vrac à même le sol,
- à créer un objet (B) dans la chambre à partir du matériau ramassé, et
- à emballer un objet (B) créé dans la chambre.

19. Procédé pour amener un matériau d'emballage (WM) en direction d'une entrée (N.1) d'une chambre, chambre dans laquelle un objet (B) doit être emballé avec un matériau d'emballage (WM), le procédé étant exécuté en utilisant un appareil d'alimentation qui comprend
- une unité de fourniture de matériau d'emballage (S.1, S.2),
- une unité de poussée (PU), et
- une unité de fermeture (CU),
le procédé comprend les étapes suivantes exécutées automatiquement :
l'unité de fourniture de matériau d'emballage (S.1, S.2) fournit un matériau d'emballage (WM) à partir d'un réservoir (RL),
le matériau d'emballage (WM) est fourni de telle sorte que
- une partie avant du matériau d'emballage (WM) forme une région d'extrémité lâche d'affaissement croissante (LEA),
- la région d'extrémité lâche (LEA) vienne se placer dans une position entre l'unité de poussée (PU) et l'entrée (N.1), et
- la région d'extrémité lâche d'affaissement (LEA) augmente encore jusqu'à ce que le matériau d'emballage (WM) ait atteint la chambre, et
l'unité de poussée (PU) est déplacé dans une direction d'engagement (ED) en direction de l'entrée (N.1) de telle sorte que l'unité de poussée (PU)
- heurte la région d'extrémité lâche d'affaissement (LEA) du matériau d'emballage (WM), et
- pousse celle-ci en direction de l'entrée (N.1),
- lorsque l'unité de poussée (PU) est déplacée dans la direction d'engagement (ED),
l'unité de fermeture (CU) est actionnée dans une position de fermeture,
l'unité de fermeture (CU) dans la position de fermeture est agencée en dessous de l'unité de poussée (PU) et ferme au moins partiellement cette région (Ar), et
l'unité de fermeture (CU) dans la position de fermeture empêche la région d'extrémité lâche (LEA) de tomber dans cette région (Ar),
**caractérisé en ce que**
l'unité de fermeture (CU) est
- d'abord actionnée dans une position de parking, et
- ensuite actionnée dans la position de fermeture,
l'unité de fermeture (CU) dans la position de parking libère au moins partiellement une région (Ar) qui est située à l'extérieur de la chambre et à côté et/ou en dessous de l'entrée (N.1) de telle sorte qu'un objet puisse tomber dans cette région (Ar).

20. Procédé selon la revendication 19,
**caractérisé en ce que**
l'unité de fermeture (CU) est pivotée ou décalée dans la position de fermeture avant que le matériau d'emballage (WM) ait atteint l'entrée (N.1), et
l'unité de poussée (PU) pousse la région d'extrémité lâche (LEA) après que l'unité de fermeture (CU) ait été pivotée dans la position de fermeture.

21. Procédé selon la revendication 20,
**caractérisé en ce que**
un chant libre (PLE) de l'unité de poussée (PU) agit comme le chant d'attaque de l'unité de poussée (PU) pendant que l'unité de poussée (PU) est déplacée dans la direction d'engagement (ED), et
le procédé comprend l'étape supplémentaire selon laquelle
le chant d'attaque (PLE) de l'unité de poussée (PU) heurte la région d'extrémité lâche (LEA) du matériau d'emballage (WM), et
ce contact se produit pendant que l'unité de poussée (PU) est déplacée dans la direction d'engagement (ED) et après que l'unité de fermeture (CU) ait atteint la position de fermeture.

22. Procédé selon la revendication 20 ou la revendication 21,
**caractérisé en ce que**
un chant libre (CLE) de l'unité de fermeture (CU) agit comme le chant d'attaque de l'unité de fermeture (CU) pendant que l'unité de fermeture (CU) est pivotée ou décalée dans la position de fermeture, et le procédé comprend l'étape supplémentaire selon laquelle le chant d'attaque (CLE) de l'unité de fermeture (CU) heurte la région d'extrémité lâche (LEA) du matériau d'emballage (WM) avant que le chant d'attaque (PLE) de l'unité de poussée (PU) heurte la région d'extrémité lâche (LEA) du matériau d'emballage (WM).

23. Procédé selon l'une des revendications 19 à 22,
**caractérisé en ce que**
l'unité de fermeture (CU) comprend une plaque (Pl.CU) qui peut être pivotée ou décalée dans une position de fermeture, et
le procédé comprend l'étape supplémentaire selon laquelle la région d'extrémité lâche d'affaissement et croissante (LEA) atteint la surface supérieure de cette plaque (Pl.CU) avant que l'unité de poussée (PU) heurte la région d'extrémité lâche (LEA).

24. Procédé selon l'une des revendications 19 à 23,
**caractérisé en ce que**
l'étape de fourniture du matériau d'emballage (WM) en direction d'une entrée (N.1) comprend l'étape selon laquelle une unité de transport de matériau d'emballage (WU) transporte la région d'extrémité lâche (LEA) en direction de l'entrée (N.1), et cette étape qui consiste à faire pivoter ou à déplacer l'unité de fermeture (CU) dans la position de fermeture comprend les étapes selon lesquelles l'unité de fermeture (CU)
- est pivotée ou décalée dans une position dans laquelle l'unité de fermeture (CU) touche l'unité de transport de matériau d'emballage (WU), et
- est arrêtée lorsqu'elle a atteint cette position de contact.

25. Procédé selon l'une des revendications 19 à 24,
**caractérisé en ce que**
le procédé comprend en outre les étapes suivantes:
l'unité de fermeture (CU) est pivotée ou décalée de telle sorte qu'elle atteigne la position de fermeture avant que la région d'extrémité lâche (LEA) atteigne l'unité de fermeture (CU), et
la région d'extrémité lâche d'affaissement (LEA) du matériau d'emballage (WM)
- est placée sur une surface supérieure de l'unité de fermeture (CU), et
- est ensuite poussée par l'unité de poussée (PU) en direction de l'entrée (N.1).

26. Procédé selon l'une des revendications 19 à 25,
**caractérisé en ce que**
l'étape qui consiste à faire pivoter ou à déplacer l'unité de fermeture (CU) dans la position de fermeture inclut l'étape selon laquelle l'unité de fermeture (CU) est tournée autour d'un axe de pivotement (Sh.CU).

27. Procédé selon l'une des revendications 19 à 26,
**caractérisé en ce que**
l'étape qui consiste à faire pivoter ou à déplacer l'unité de fermeture (CU) dans la position de fermeture est exécutée avant que l'étape qui consiste à déplacer l'unité de poussée (PU) dans la direction d'engagement (ED) soit commencée.

28. Procédé selon l'une des revendications 19 à 27,
**caractérisé en ce que**
après que l'unité de poussée (PU) ait heurté la région d'extrémité lâche (LEA), une surface de transport entraînée (CS) d'une unité de transport de matériau d'emballage (WU) transporte la région d'extrémité lâche (LEA) du matériau d'emballage (WM) en direction de l'entrée (N.1).

29. Procédé pour emballer un objet (B) dans une chambre présentant une entrée (N.1),
le procédé comprenant les étapes suivantes:
- un matériau d'emballage (WM) est amené en direction de l'entrée (N.1) en appliquant un procédé selon l'une des revendications 19 à 28,
- le matériau d'emballage (WM) est injecté à travers l'entrée (N.1) dans la chambre, et
- l'objet (B) dans la chambre est emballé dans le matériau d'emballage injecté (WM).

30. Procédé selon la revendication 29,
**caractérisé en ce que**
l'objet (B) est créé dans la chambre,
l'unité de fermeture (CU) se trouve dans la position de parking et l'unité de poussée (PU) se trouve également dans une position de parking pendant que l'objet (B) est créé dans la chambre, et
l'accomplissement de la création de l'objet (B) dans la chambre déclenche les deux étapes suivantes:
- l'unité de fermeture (CU) est pivotée ou décalée dans la position de fermeture, et
- l'unité de poussée (PU) est déplacée hors de la position de parking dans la direction d'engagement (ED) et heurte la région d'extrémité lâche (LEA).
